(19) Europäisches Patentamt
European Patent Office
Office européen des brevets

(11) EP 1 313 817 B1

(12) FASCICULE DE BREVET EUROPEEN

(45) Date de publication et mention de la délivrance du brevet:
**08.03.2006 Bulletin 2006/10**

(21) Numéro de dépôt: **01958161.0**

(22) Date de dépôt: **23.07.2001**

(51) Int Cl.:
***C09D 183/04*** *(2006.01)* ***C09D 7/12*** *(2006.01)*

(86) Numéro de dépôt international:
**PCT/FR2001/002400**

(87) Numéro de publication internationale:
**WO 2002/018506 (07.03.2002 Gazette 2002/10)**

# (54) PROCEDE DE LUTTE CONTRE L'APPARITION DE BROUILLARD LORS DE L'ENDUCTION DE SUPPORTS FLEXIBLES AVEC UNE COMPOSITION SILICONE LIQUIDE RETICULABLE, DANS UN DISPOSITIF A CYLINDRES

VERFAHREN ZUR VERHINDERUNG VON NEBELERZEUGUNG WÄHREND DER BESCHICHTUNG VON FLEXIBLEN OBERFLÄCHEN MIT VERNETZBAREN SILIKONFLÜSSIGKEITEN MITTELS WALZEN

METHOD FOR PREVENTING MISTING WHEN COATING FLEXIBLE SUPPORTS WITH A CROSSLINKABLE LIQUID SILICONE COMPOSITION, IN A DEVICE COMPRISING CYLINDERS

(84) Etats contractants désignés:
**AT BE CH CY DE DK ES FI FR GB GR IE IT LI LU MC NL PT SE TR**

(30) Priorité: **01.09.2000 FR 0011193**

(43) Date de publication de la demande:
**28.05.2003 Bulletin 2003/22**

(73) Titulaire: **RHODIA CHIMIE**
**92100 Boulogne Billancourt (FR)**

(72) Inventeurs:
- **BRANLARD, Paul**
  **F-69005 LYON (FR)**
- **GIRAUD, Yves**
  **F-69110 SAINTE FOY LES LYON (FR)**
- **GUYOT, Christophe**
  **F-69005 LYON (FR)**
- **MAGD, Frédéric**
  **F-69005 LYON (FR)**
- **GARNES, Frédéric**
  **F-69110 SAINT GENIS LAVAL (FR)**

(74) Mandataire: **Fleurance, Raphael et al**
**Cabinet Plasseraud**
**65/67 rue de la Victoire**
**75440 Paris Cedex 09 (FR)**

(56) Documents cités:
**EP-A- 0 716 115**
**EP-A- 0 972 811**
**WO-A-99/18155**
**US-A- 3 503 782**
**US-A- 4 806 391**
**US-A- 5 698 655**

EP 1 313 817 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention se rapporte au domaine général de l'enduction silicone sur cylindres à grande vitesse de supports flexibles divers, tels que les feuilles de papier ou de polymère synthétique (polyoléfine, polyester...), ou bien encore de textile.

Plus précisément, l'invention concerne l'enduction de matériaux flexibles avec des compositions liquides contenant un ou plusieurs polyorganosiloxanes (POS) réticulables par polyaddition, par polycondensation (en émulsion), par voie cationique ou par voie radicalaire, de façon à former un film ou revêtement protecteur ayant notamment des propriétés d'anti-adhérence et/ou hydrophobes.

Les supports flexibles peuvent être des papiers, des cartons, des films plastiques ou des films métalliques. Les applications de ces supports enduits de silicone sont par exemple : papier alimentaire (moules à pâtisserie, emballage), étiquette/ruban adhésif, joint, etc...

L'enduction de ces supports flexibles avec des silicones liquides réticulables est réalisée sur des dispositifs d'enduction fonctionnant en continu, et à très grande vitesse. Ces dispositifs comportent des têtes d'enduction constituées de plusieurs cylindres dont notamment un cylindre presseur et un cylindre enducteur, lequel est alimenté en continu en composition silicone liquide réticulable, au moyen d'une série de cylindres accolés les uns aux autres. La bande de supports flexibles circule à grande vitesse entre le cylindre presseur et le cylindre enducteur pour être enduite sur au moins une de ses faces d'un film silicone destiné à réticuler par l'intermédiaire de moyens de réticulation disposés en aval de la tête d'enduction. Ces moyens de réticulation peuvent être des émetteurs de chaleur, de radiations (e.g. UV) ou de faisceaux d'électrons par exemple.

Dans la course à la productivité, les fabricants de supports flexibles revêtus de silicone anti-adhérent sont demandeurs de formulations silicone liquides d'enduction, adaptées à des vitesses linéaires de défilement de la bande de supports flexibles de plus en

plus élevées. Le facteur économique n'est évidement pas anodin dans cette recherche de nouvelles formulations silicone pour enduction à grande vitesse.

Or, on sait que les grandes vitesses sur des machines d'enduction en continu, sont synonymes de problèmes de transfert du film liquide silicone du cylindre enducteur sur la bande de support flexible défilante. Ces problèmes de transfert ("splitting") se traduisent notamment par l'apparition d'un brouillard ou d'un aérosol ("misting", "fogging") dans l'environnement de la tête d'enduction et, plus particulièrement, au niveau des contacts entre les cylindres en rotation et/ou entre le cylindre enducteur et le support flexible à enduire. La densité de ce brouillard ou de cet aérosol augmente lorsque la vitesse linéique de défilement et donc la vitesse de rotation des cylindres augmente.

Ce phénomène a pour conséquence tout d'abord une perte de consommable, et surtout un dépôt de gouttelettes de liquide d'enduction sur le support en aval (par exemple au niveau du four), ce qui nuit gravement à la qualité du revêtement : aspect peau d'orange, défaut de couverture, qualités mécaniques du revêtement réticulé (rub-off), anti-adhérence.

En outre, cette formation indésirable de brouillard a des conséquences néfastes sur le plan de l'hygiène industrielle et de la sécurité des opérateurs, qui sont exposés au voisinage du dispositif d'enduction à cylindres, à une forte teneur en aérosol. Cela peut s'avérer nocif.

Par ailleurs, le "misting" provoque l'encrassement rapide du dispositif d'enduction à cylindres, d'où des contraintes d'entretien et une usure prématurée.

Pour se prémunir des conséquences de ce brouillard, on dispose en général autour de la tête d'enduction, d'un système d'aspiration permettant de capter ledit brouillard.
Par ailleurs, l'homme du métier connaît un certain nombre de réglages de la tête d'enduction pour contrecarrer ce phénomène. On en citera quelques exemples ci-après :

- baisser la vitesse au détriment de la productivité ;
- diminuer le taux de dépôt de silicone au détriment des propriétés du support flexible siliconé que l'on cherche à obtenir (aspect, couverture, anti-adhérence, propriétés mécaniques) ;
- augmentation de la différence entre la vitesse tangentielle du cylindre enducteur et la vitesse linéaire du papier. Mais au-delà d'un certain différentiel, l'homogénéité de la couche enduite est gravement perturbée. De plus, cela permet de réduire la densité du brouillard sans pour autant l'annihiler suffisamment pour permettre une augmentation significative de la vitesse d'enduction ;
- augmentation de la pression entre le cylindre enducteur et le cylindre presseur; là encore dans une certaine limite et sans suppression intéressante du phénomène de formation de brouillard.

Une autre approche pour lutter contre la formation de brouillard dans les machines d'enduction à cylindres, consiste à agir sur la formulation de la composition silicone liquide d'enduction.
Selon cette approche, il est connu de réduire le degré de polymérisation moyen en nombre des POS constituant le

liquide d'enduction silicone et, par voie de conséquence, de réduire la viscosité du bain d'enduction silicone pour limiter la densité du brouillard.

Ces méthodes connues souffrent d'un grave inconvénient qui est de modifier sensiblement les propriétés et, notamment, l'anti-adhérence du support flexible siliconé que l'on cherche à obtenir.

A titre d'illustration de cette approche au travers de la formulation silicone, on peut citer la demande de brevet européen **EP-0 716115** qui décrit un procédé de fabrication d'une composition silicone d'enduction à grande vitesse avec des cylindres, cette composition étant présentée comme permettant la réduction de la densité de brouillard. Selon ce procédé, on met en oeuvre un polydiméthyl-méthylhydrogénosiloxane à extrémitéS triméthylsilyle de degré de polymérisation égale à 12, ainsi que 0,01% d'un polydiméthylsiloxane substitué par des fonctions perfluo-éthylbutyle et méthylvinyle, dont les extrémités sont du type diméthylvinylsiloxyle et de degré de polymérisation égale à 300, ainsi que du polypropylèneglycol et éventuellement un alcool stéarique ou oléique. Cela conduit à des polydiméthy-siloxanes fonctionnalisés par des groupements de polyoxy-propylène. Ces PDMS fonctionnalisés sont associés avec d'autres PDMS fonctionnalisés, e.g. par des motifs héxènyles ainsi qu'avec un catalyseur d'hydrosilylation à base de platine, pour former des compositions silicone d'enduction permettant de réduire la formation de brouillard. Les motifs de fonctionnalisation peuvent être des restes hydrophobes tels que des restes d'acide stéarique ou oléique.

Il est clair que de telles compositions sont relativement complexes et donc coûteuses à obtenir. Par ailleurs, elles restent encore perfectibles en ce qui concerne la lutte contre la formation de brouillard dans l'enduction silicone sur cylindres, à grande vitesse.

Le brevet américain **US-4 808 391** concerne des encres et des vernis à base de silicone, et plus précisément un procédé d'application de ces encres/vernis sur un substrat, à l'aide de machine d'enduction à rouleau fonctionnant à grande vitesse. Ce brevet divulgue notamment des compositions comprenant des polydiméthylsiloxanes PDMS à extrémités vinylées de viscosité à 25°C comprise entre 15000 et 50000 mPa.s. (Exemples XII et XIII : 30000 et 18000 mPa.s à 25°C respectivement). Ces compositions liquides d'enduction comprennent également un catalyseur à base de platine et un additif rhéologique constitué par de la silice à haute surface spécifique, en particulier de la silice de combustion, à raison de moins de 1% et de moins de 5% en poids sur sec, dans les exemples XII et XIII respectivement. Cette composition comporte aussi un polyméthylhydrogénosiloxane apte à réagir avec le POS Si-Vi en présence d'un catalyseur au platine.

Selon ce brevet, c'est le choix d'un intervalle précis de viscosité entre 15000 et 50000 mPa.s pour le POS majoritaire Si-Vi, qui permet d'apporter une solution au problème de formation de brouillard. En réalité dans ce brevet, seules les compositions liquides d'enduction exemptes d'additif rhéologique du type silice, ont été testées dans un dispositif d'enduction à rouleaux fonctionnant à grande vitesse. D'après les résultats obtenus, le compromis *réduction du brouillard/ comportement rhéologique* acceptable, se situe dans l'intervalle de viscosité compris entre 10000 et 60000 mPa.s à 25°C. Ce document n'enseigne rien sur un éventuel effet positif de l'additif rhéologique vis-à-vis de la lutte contre la formation de brouillard.

Le brevet américain **US-6 057 033** divulgue des compositions silicones destinées à être enduites sur des supports flexibles pour former après réticulation par voie cationique sous UV à un revêtement anti-adhérent. En plus des POS, ces compositions comprennent des fibres de cellulose ayant une longueur moyenne comprise entre 15 et 100μm et une épaisseur moyenne comprise entre 5 et 40μm. Les POS mis en oeuvre sont des POS fonctionnalisés par des groupements de réticulation du type acryloxy ou méthacryloxy, permettant la réticulation par voie radicalaire sous UV.

Les fibres de cellulose incorporées dans la composition permettent d'apporter une solution au problème technique qui est d'obtenir un revêtement silicone anti-adhérent réticulé non cassant. Les fibres de cellulose sont présentées comme procurant des améliorations en ce qui concerne le transfert du film de silicone d'enduction sur le support, la résistance au découpage, les propriétés mécaniques (résistance à la tension et à la déchirure), la fixation du revêtement sur le papier, la diminution de l'absorption du liquide d'enduction au sein du papier, et accessoirement la réduction de la formation de brouillard.

Sur ce dernier point, le brevet US 6 057 033 ne fournit aucun élément quantitatif d'appréciation de la réduction de brouillard entraîné par les fibres cellulosiques. Il y a tout lieu de penser que cette réduction demeure tout à fait insuffisante.

Par ailleurs, il est à noter que l'emploi de charges particulaires, par exemple siliceuses, dans des compositions silicone liquides destinées à être enduites sur des supports flexibles par exemple en papier pour former des revêtements réticulés anti-adhérents, est une caractéristique connue depuis fort longtemps, c'est-à-dire depuis l'apparition des revêtements silicone anti-adhérents (cf. brevet américain US-3 503 782).

On citera également pour mémoire la demande de brevet japonais **JP-62 64011** qui décrit un liquide d'enduction contenant une résine filmogène et un solvant et qui contient également des particules de cire de diamètre compris entre 1 et 10μm, le diamètre de la particule la plus grosse étant au plus égale à 150% de l'épaisseur du film humide de revêtement appliqué sur le support. Un tel liquide d'enduction permettrait un accroissement de la vitesse de revêtement d'au moins 10 à 30 m/min, a priori grâce à une limitation de la formation de brouillard.

L'enseignement d'un tel document est à écarter car il ne concerne pas les revêtements silicone.

Dans un tel état de la technique, l'un des objectifs essentiels de l'invention est de proposer un procédé efficace de lutte contre l'apparition de brouillard lors de l'enduction de supports flexibles avec une composition silicone liquide précurseur de revêtements réticulés, cette enduction s'opérant à l'aide d'un dispositif d'enduction à cylindre fonctionnant à grande vitesse.

Un autre objectif essentiel de l'invention est de proposer un procédé économique et simple de lutte contre l'apparition de brouillard lors de l'enduction de supports flexibles avec une composition silicone destinée à réticuler, cette enduction s'opérant dans un dispositif d'enduction à cylindres fonctionnant à grande vitesse.

Un autre objectif essentiel de l'invention est de proposer un procédé d'enduction de supports flexibles à grande vitesse sur dispositif à cylindres, dans lequel la formation de brouillard est réduite, de telle sorte que la vitesse d'apparition de cette perturbation soit significativement augmentée.

Un autre objectif essentiel de l'invention est de fournir un nouvel additif permettant de réduire la formation de brouillard lors de l'enduction à grande vitesse sur cylindres, de matériaux flexibles, au moyen de compositions silicone réticulables en revêtements anti-adhérents.

Un autre objectif essentiel de l'invention est de proposer un procédé de lutte contre l'apparition de brouillard dans le cadre de l'enduction de supports flexibles, avec une composition silicone réticulable en revêtements anti-adhérents, à l'aide d'un dispositif d'enduction à cylindre, ledit procédé se devant d'avoir des incidences positives sur l'aspect et/ou la couverture et/ou les propriétés mécaniques (rub-off) et/ou les propriétés d'anti-adhérence du revêtement réticulé que l'on cherche à obtenir sur au moins une des faces du support flexible.

Tous ces objectifs, parmi d'autres, sont atteints par la présente invention qui concerne tout d'abord un procédé de lutte contre l'apparition de brouillard ("misting") lors de l'enduction de supports flexibles avec au moins une composition silicone liquide précurseur de revêtement(s) silicone, à l'aide d'un dispositif d'enduction à cylindres, la composition liquide comprenant :

-A- au moins un polyorganosiloxane (POS) réticulable par polyaddition, par polycondensation, par voie cationique ou par voie radicalaire ;
-B- éventuellement au moins un composé organosilicique réticulant ;
-C- éventuellement au moins un catalyseur de la réaction de réticulation ;

caractérisé en ce que l'on met en oeuvre la composition liquide d'enduction obtenue par mélange :

- d'une phase silicone comportant un ou plusieurs POS (A) et éventuellement un ou plusieurs composés(s) (B) (réticulant) et dont la viscosité η à 25°C est inférieure à 2000 mPa.s, de préférence comprise entre 50 et 1400 mPa.s, et plus préférentiellement encore comprise entre 100 et 1000 mPa.s ;
- avec des particules anti-brouillard non cellulosiques dont la granulométrie donnée par leur $D_{50}$ (en μm) est telle que :

$$D_{50} \leq 10$$

de préférence

$$0{,}001 \leq D_{50} \leq 5$$

et plus préférentiellement encore

$$0{,}01 \leq D_{50} \leq 2$$

ces particules anti-brouillard étant incorporées dans la composition silicone liquide à raison d'au plus 30% en poids, de préférence à raison de 0,1 à 15 % en poids et plus préférentiellement encore à raison de 1 à 10% en poids
- et éventuellement avec un composé liquide (D)constitué:

  i. par un diluant et/ou un solvant consistant dans un composé organique non organosilicique ou organosilicique, capable ou non de réagir avec le (ou les) composé(s)(A),
  ii. et/ou par de l'eau dans le cas de la mise en oeuvre d'un système en émulsion.

Il est du mérite des inventeurs d'avoir pu comprendre le phénomène qui préside à la formation de brouillard

lors du transfert de la couche liquide de silicone du cylindre d'enduction sur la bande défilante de supports flexibles à enduire. Ainsi, partant du constat qu'il convenait de rompre le plus tôt possible d'après leur formation les filaments de silicone liquide qui se créent lors du transfert, les inventeurs ont procédé à une sélection de particules anti-brouillard non cellulosiques, ces particules ayant une granulométrie particulière et étant présentes dans une quantité judicieusement choisie pour rompre précocement les filaments de liquide de silicone lors du transfert du cylindre enducteur sur la bande défilante, sans entraîner de perturbations rédhibitoires sur la viscosité de la composition liquide.
Le résultat obtenu grâce à l'invention est un contrôle efficace de la formation de brouillard, ce qui se traduit par une augmentation significative de la vitesse d'apparition dudit brouillard dans un système d'enduction à cylindre fonctionnant à grande vitesse.

Au sens de l'invention, la paramètre $D_{50}$ est la taille médiane de la répartition granulométrique. Elle peut être déterminée sur le graphe de répartition granulométrique cumulé, obtenu par l'une des techniques analytiques évoquées ci-dessous, en déterminant la taille correspondant au cumul de 50% de la population des particules. Concrètement, une $D_{50}$ de 10 $\mu$m indique que 50% des particules ont une taille inférieure à 10$\mu$m. Les mesures de granulométrie peuvent être effectuées par des techniques classiques telles que sédimentation, diffraction laser, microscopie optique couplée à une analyse d'image, etc.

Les particules qui sont ici considérées peuvent être des particules élémentaires ou des agrégats, indissociés dans la phase silicone, formés par un assemblage cohésif de particules élémentaires ayant des tailles inférieures à la $D_{50}$. La granulométrie dont il s'agit est celle des particules, telles qu'elles sont obtenues après mélange avec la phase silicone. A noter que l'on peut partir de particules plus grosses ayant une $D_{50} \geq 10$ $\mu$m et consistant dans des agglomérats formés par un assemblage dissociable d'agrégats, dès lors que lesdits agglomérats sont capables de se dissocier au cours du procédé de mélange des particules anti-brouillard (PAB) avec la phase silicone, pour conduire à des agrégats de taille $\leq 10$ $\mu$m.

Toutes les viscosités dont il est question dans le présent exposé, correspondent à une grandeur de viscosité dynamique à 25°c dite "Newtonienne", c'est-à-dire mesurée, de manière connue en soi, à un gradient de vitesse de cisaillement suffisamment faible pour que la viscosité mesurée soit indépendante du gradient de vitesse.

Selon une caractéristique préférée de l'invention, les particules anti-brouillard sont sélectionnées dans le groupe comprenant :

- noir de carbone
- $SiO_2$
- $CaCO_3$
- $TiO_2$
- $BaSO_4$
- $Al_2O_3$
- chaux
- talc
- mica
- quartz broyé
- argiles naturelles ou synthétiques (vermiculite expansée ou non, kaolin)
- poudres à base de polymères(s) synthétique(s) autre(s) qu'un polymère cellulosique
- terres de diatomées
- et leurs mélanges ;

la silice, le kaolin, le talc, $TiO_2$ étant particulièrement préférés ;
ces particules ayant éventuellement subi un traitement de surface.

Conformément à l'invention, la surface spécifique est également un paramètre important pour les particules anti-brouillard. Ainsi, ces dernières ont avantageusement une surface spécifique (Ss) BET comprise entre 0,5 $m^2$/g et 500 $m^2$/g, de préférence entre 2 et 400 $m^2$/g, et plus préférentiellement entre 5 et 300 $m^2$/g.

Dans le cas où les particules anti-brouillard sont constituées de silice, il est à remarquer qu'il peut s'agir de silice colloïdale, de silice de précipitation ou de silice de pyrogénation.

Ces silices sont de préférence utilisées telles quelles ou peuvent encore, selon une variante, avoir subi un traitement de surface à l'aide de composés organo-siliciques habituellement utilisés pour cet usage. Parmi ces composés, figurent:

- ❖ les méthylpolysiloxanes tels que l'hexaméthyldisiloxane, l'octaméthylcyclotétrasiloxane,
- ❖ les méthylpolysilazanes tels que fhexaméthyldisilazane, l'hexaméthyltrisilazane,
- ❖ les chlorosilanes tels que le diméthyldichlorosilane, le triméthylchlorosilane, le méthylvinyldichlorosilane, le

diméthylvinylchlorosilane,

❖ les alcoxysilanes tels que le diméthyldiméthoxysilane, le diméthylvinyléthoxysilane, le triméthylméthoxysilane, l'octyltriéthoxysilane.

Lors de ce traitement, les silices peuvent accroître leur poids de départ jusqu'à un taux de 20%, de préférence 18% environ.

Les particules anti-brouillard à base de polymères synthétiques sont constituées de polymères issus de procédé classique de copolymérisation en émulsion d'un ou plusieurs monomères organiques polymérisables. Ces monomères organiques sont de préférence choisis parmi :

- a) les (méth)acrylate d'alkyle dont la partie alkyle comporte de préférence de 1 à 18 atomes de carbone, en particulier l'acrylate de méthyle, l'acrylate d'éthyle, l'acrylate de propyle, l'acrylate de n-butyle, l'acrylate d'isobutyle, l'acrylate d'amyle, l'acrylate de lauryle, l'acrylate d'isolamyle, l'acrylate de (2 éthyle-2 hexyle), l'acrylate d'octyle, le méthacrylate de méthyle, le méthacrylate de chloroéthyle, le méthacrylate de butyle, le méthacrylate de (diméthyl-3,3 butyle), le méthacrylate d'éthyle, le méthacrylate d'isobutyle, le méthacrylate d'isopropyle, le méthacrylate de phényle, le chloroacrylate de butyle, le chloroacrylate de méthyle, le chloroacrylate d'éthyle, le chloroacrylate d'isopropyle, le chloroacrylate de cyclohexyle ;
- b) les esters $\alpha,\beta$-éthyléniquement insaturés d'acides monocarboxyliques dont la partie acide est non polymérisable et dont la partie insaturée comporte, de préférence, de 2 à 14 atomes de carbone et la partie acide de 2 à 12 atomes de carbone, en particulier l'acétate de vinyle, le propionate de vinyle, le butyrate de vinyle, l'acétate d'alkyle, le versatate® de vinyle (marque déposée pour des esters d'acides $\alpha$-ramifiés en $C_9$-$C_{11}$), le laurate de vinyle, le benzoate de vinyle, le triméthylacétate de vinyle, le pivilate de vinyle et le trichloroacétate de vinyle ;
- c) les esters et les hemi-esters d'acides polycarboxyliques $\alpha,\beta$-éthyléniquement insaturés ayant de 4 à 24 atomes de carbone, en particulier e diméthyle, le maléate de diéthyle, le fumarate de méthyle et d'éthyle, le fumarate d' (éthyl-2-hexyle) ;
- d) les halogènes vinyliques en particulier le chlorure de vinyle, le fluorure de vinyle, le chlorure de vinylidène, le fluorure de vinylidène ;
- e) les vinyl-aromatiques présentant de préférence au plus 24 atomes de carbone et choisis en particulier parmi le styrène, l'$\alpha$-méthylstyrène, le 4-méthylstyrène, le 2-méthylstyrène, le 3-méthylstyrène, le 4-méthoxystyrène, le 2-hydroxyméthylstyrène, le 4-éthylstyrène, le 4-éthoxystyrène, le 3,4-diméthylstyrène, le 2-chlorostyrène, le 3-chlorostyrène, le 4-chloro-3-méthylstyrène, le 4-tert-butylstryrène, le 4-dichlorostyrène, le 2,6-dichlorostyrène, le 2,5-difluorostyrène, et le 1-vinylnaphtalène ;
- f) les diènes aliphatiques conjugués présentant de préférence de 3 à 12 atomes de carbone, en particulier le 1,3-butadiène, l'isoprène et le 2-chloro-1,3-butadiène ;
- g) les nitriles $\alpha,\beta$-éthyléniquement insaturés ayant de préférence de 3 à 6 atomes de carbone tels que l'acrylonitrile et le méthacrylonitrile.

Conformément à l'invention, il est possible de mettre en oeuvre à titre de PAB, tous autres polymères -à l'exception des polymères cellulosiques- se présentant, de préférence, sous forme de poudres obtenues par des procédés connus en soi, par exemple : broyage cryogénique, prilling, atomisation...

Ces poudres de polymères peuvent être, par exemple, des poudres de polyamides, de polytétrafluoroéthylène (PTFE).

Le mode de préparation de la composition liquide d'enduction chargée en particules anti-brouillard, constitue également l'un des éléments essentiels de la présente invention.

C'est ainsi qu'il est préférable de mélanger au moins une partie de la phase silicone avec tout ou partie des particules anti-brouillard se présentant sous forme sèche pulvérulente et/ou sous forme de suspension dans un liquide (organique ou aqueux), de préférence sous forme sèche pulvérulente.

Plus précisément, les modalités de mélange préférées sont les suivantes :

- soit on mélange de façon progressive la totalité des particules anti-brouillard avec la phase silicone sous forme continue ou dispersée;
- soit on mélange de façon progressive la totalité des particules anti-brouillard avec une fraction du POS (A), ce mélange intermédiaire étant ensuite mélangé avec la phase silicone, sous forme continue ou dispersée, comprenant la fraction résiduelle de la phase silicone.

De manière plus préférée encore, le mélange phase silicone/particules anti-brouillard s'opère à l'aide d'un mélangeur classique, connu pour être dispersant dans des milieux fluides en opérant à température ambiante.

A titre d'exemples, on peut citer les disperseurs lents, les mélangeurs statiques, les mélangeurs à pale(s), les extrudeuses

à vis simples ou multiples, les mélangeurs planétaires, les mélangeurs à crochet, les disperseurs lents.

Selon un mode de mise en oeuvre particulier, correspondant au cas où les particules anti-brouillard sont constituées de silice de pyrogénation et/ou de précipitation, traitées ou non, on procède comme suit :

o dans un premier temps, on mélange-de manière progressive-une partie de la phase silicone-sous forme continue-avec les particules antibrouillard siliceuses dans un mélangeur classique, connu pour être dispersant dans des milieux fluides et dont la vitesse de rotation est comprise entre 50 et 500 tr/min, de préférence entre 80 et 120 tr/min, à une température ambiante (23°C), pendant au moins une heure,
o dans un deuxième temps, le mélange ainsi obtenu est porté sous agitation à une température comprise entre 100 et 200°C, pendant au moins une heure,
o et, dans un troisième temps, on procède à au moins un mélange du reste de la phase silicone avec le mélange obtenu dans le deuxième temps,
ce (ou ces) mélange(s) complémentaire(s) s'effectuant de préférence à température ambiante.

En pratique, le deuxième mélange permet de diluer les particules anti-brouillard en incorporant seulement de la phase silicone résiduelle.

Naturellement, la composition silicone liquide peut comprendre d'autres additifs initialement contenus dans la phase silicone ou incorporés lors du mélange avec les particules anti-brouillard.

Selon un mode préféré de lutte contre la formation de brouillard, on choisit les produits suivants à titre de constituants de la phase silicone de la composition liquide d'enduction :

- POS (A) : produit présentant des motifs de formule :

$$W_aZ_b\,SiO_{\frac{4-(a+b)}{2}} \qquad \textbf{(A.1)}$$

dans laquelle :

- W est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryle et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne:

$$Z_cSiO_{\frac{4-c}{2}} \qquad \textbf{(A.2)}$$

dans laquelle Z a la même signification que ci-dessus et c a une valeur comprise entre 0 et 3, par exemple entre 1 et 3; les diméthylpolysiloxanes à extrémités diméthylvinylsilyle, les copolymères méthylvinyldiméthylpolysiloxanes à extrémités triméthylsilyle, les copolymères méthylvinyldiméthyl-polysiloxanes à extrémités diméthylvinylsilyle, les méthylvinylpolysiloxanes cycliques, étant plus spécialement sélectionnés;

- POS (B) : produit présentant des motifs siloxyle de formule :

$$H_dL_cSiO_{\frac{4-(d+c)}{2}} \qquad \textbf{(B.1)}$$

dans laquelle :

- L est un groupe hydrocarboné monovalent, exempt d'action défavorable sur l'activité du catalyseur e choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,

- d est 1 ou 2, c est 0, 1 ou 2, d + c a une valeur comprise entre 1 et 3,
- éventuellement, au moins une partie des autres motifs étant des motifs de formule moyenne :

$$L_gSiO_{\frac{4-g}{2}} \qquad (B.2)$$

dans laquelle L a la même signification que ci-dessus et g a une valeur comprise entre 0 et 3, et le poly(diméthylsiloxane) (méthylhydrogénosiloxy) (α,ω-diméthylhydrogéno) siloxane, étant plus spécialement sélectionnés.

Ces POS peuvent être du type de ceux qui réticulent à température ambiante ou à la chaleur par des réactions de polyaddition en présence d'un catalyseur métallique en l'occurrence à base de platine. Ce sont des compositions POS réticulables appelées RTV ("Room Température Vulcanising") ou des compositions POS polyaddition dénommées EVC qui est l'abréviation de "élastomère vulcanisable à chaud".

Les compositions POS bicomposantes ou monocomposantes RTV ou EVC de polyaddition, essentiellement par réaction de groupements hydrogénosylylés sur des groupements alkényl sylylés, en présence généralement d'un catalyseur métallique (de préférence au platine), sont décrites par exemple dans les brevets US-3 220 972, 3 284 406, 3 436 366, 3 697 473 et 4 340 709.

Selon une variante, la composition silicone liquide mise en oeuvre peut être choisie parmi les compositions POS bicomposante ou monocomposante réticulant à température ambiante par des réactions de polycondensation sous l'action de l'humidité, en présence généralement d'un catalyseur métallique, par exemple un composé de l'étain (RTV polycondensation). Ces compositions sont décrites par exemple dans les brevets US-3 065 194, 3 542 901, 3 779 986, 4 417 042 et dans le brevet FR-2 638 752 (compositions monocomposante) et dans les brevets US-3 678 002, 3 888 815, 3 933 729 et 4 064 096 (compositions bicomposante).

Les POS entrant dans ces compositions RTV polycondensation sont des polysiloxanes linéaires ramifiés ou réticulés porteurs de groupements hydroxyle ou de groupements hydrolysables par exemple alcoxy. De pareilles compositions peuvent contenir en outre un agent de réticulation, qui est, notamment, un cylindre portant au moins 3 groupements hydrolysables comme par exemple un silicate, un alkyltrialcoxysilane ou un aminoalkyle trialcoxysilane.

La composition silicone liquide d'enduction peut également comprendre un ou plusieurs POS réticulables par voie cationique ou radicalaire :

o en présence d'une quantité efficace de systèmes amorceurs cationiques (amorceurs thermiques et/ou photoamorceurs)- les amorceurs du type borate d'onium ou de complexes organo-métalliques, les solvants organiques donneurs de protons (alcool isopropylique, alcool benzylique... ),

o et/ou selon le cas en présence d'un initiateur radicalaire, par l'intermédiaire d'une activation par rayonnement actinique (UV) ou par faisceaux d'électrons.

Ces POS sont par exemple des époxysilicones et/ou des vinyléthersilicones, linéaires ou cycliques.

De tels POS époxy ou vinyloxyfonctionnels sont décrits notamment dans les brevets DE-4 009 889, EP-0 396 130, EP-0 355 381, EP-0 105 341, FR-2 110 115, FR-2 526 800.

Les POS époxy fonctionnels peuvent être préparés par réactions d'hydrosylylation entre des huiles à motifs SiH et des composés époxy-fonctionnels tels que le vinyl-4-cyclohexenone ou allyl-glycidyléther.

Les POS vinyloxyfonctionnels peuvent être préparés par réaction d'hydrosilylation entre des huiles à motifs SiH et des composés vinyloxyfonctionnels tels que l'allylvinyléther ou l'allyl-vinyloxyéthoxybenzène.

Outre ces POS, la composition silicone liquide d'enduction peut également contenir :

☐ au moins un promoteur d'adhérence (E),

☐ et/ou au moins additif (F) courant dans les compositions silicone réticulant par polyaddition, par polyconden-sation, par voie cationique ou par voie radicalaire.

S'agissant des additifs (F), on peut citer :

- pour les compositions RTV POS polyaddition :

  les ralentisseurs de la réaction d'addition (e.g. tétraméthylvinyltétrasiloxane, pyridine, phosphines, phosphites, amides insaturés et alcools acétyléniques ;

- pour les compositions POS RTV ou EVC :

les agents réticulants tels que les alkyltrialcoxysilane les silicates d'alkyle, les polysilicates d'alkyle (silicate de méthyle, d'éthyle, silicate d'isopropyle, silicate de n-propyle...) ;

- pour les POS réticulables par voie cationique et/ou radicalaire par activation sous rayon-nements ou faisceaux d'électrons :

  . les diluants époxyéther,
  . les pigments du type noir de carbone, dioxyde de titane, phtalocyanine, benzimidazolone, naphtone, diazopyrazolone...,
  . les photosensibilisateurs choisis parmi les produits (poly(aromatiques) - éventuellement métalliques- et les produits hétérocycliques (phénotiazine, tétracène, périlène, anthra-cène, xantopinacole, thioxantone...) ;

- et de manière générale pour tous les POS :

  * les pigments,
  * les $\alpha$-oléfines,
  * les stabilisateurs, comprenant notamment les agents tensioactifs appropriés utilisables pour les compositions d'enduction en émulsion.

Avantageusement, la composition silicone liquide d'enduction est une huile silicone :

- qui comprend un ou plusieurs POS (A), éventuellement un composé(B)-et éventuellement un diluant et/ou un solvant (Di)-,
- et qui est chargée en particules anti-brouillard.

A titre d'exemples de diluant et/ou de solvant (Di), on peut citer, les solvants aliphatiques, aromatiques, les solvants chlorés, e.g. : white spirit, les cétones, avantageusement la méthyléthylcétone, l'acétone, les alcools avantageusement l'isopropanol, l'alcool n-butylique, les hydrocarbures saturés, insaturés ou aromatiques, avantageusement le pentane, l'hexane, l'heptane, l'octane, le toluène, le xylène, le benzène, les coupes pétrolières "naphtas"; les coupes pétrolières en C7-C8 (en particulier l'essence E), les hydrocarbures halogénés et leurs mélanges.

Selon une variante, la composition silicone liquide d'enduction est une émulsion aqueuse de phase silicone à base de composés(A) et (B), et éventuellement chargée en particules anti-brouillard.

Ces émulsions silicone sont obtenues de manière connue en soi, par exemple comme décrit dans la demande de brevet français n°97 16872, dont le contenu est intégré dans le présent exposé par référence.

Suivant un autre de ses aspects l'invention concerne l'utilisation de particules non cellulosiques à titre d'additifs anti-brouillard dans des compositions silicone liquides réticulables destinées à l'enduction de supports flexibles pour former des revêtements réticulés, à l'aide d'un dispositif d'enduction à cylindres, de manière à lutter contre l'apparition de brouillard lors de l'enduction, caractérisée en ce que les particules anti-brouillard sont telles que définies ci-dessus.

Enfin, l'invention vise également un procédé d'enduction de supports flexibles avec au moins une composition silicone liquide précurseur de revêtement(s) silicone, cette enduction s'effectuant à l'aide d'un dispositif d'enduction à cylindres, caractérisé en ce que l'on a recours au procédé de lutte contre l'apparition de brouillard ("misting") telle que définie ci-dessus.

Une variante de ce procédé consiste dans l'utilisation de d'un dispositif d'enduction comportant au moins un cylindre gravé.

Il apparaît donc que l'invention propose un moyen original simple, économique et fiable de lutte contre la production de brouillard lors de l'enduction de supports flexibles (par exemple en papier, en film ou en film polymère) avec une composition silicone liquide réticulable, dans des dispositifs d'enduction à cylindre fonctionnant à grande vitesse. La conséquence industrielle pratique est que les vitesses de défilement peuvent encore être augmentées sans qu'apparaisse ce phénomène de brouillard nuisible à la qualité de l'enduction. Le moyen de lutte proposé par l'invention a également pour avantage non négligeable de ne pas nuire aux qualités d'aspect, à la couverture, aux propriétés d'anti-adhérence, ainsi qu'aux propriétés mécaniques (rub-off) du revêtement réticulé silicone que l'on cherche à obtenir sur au moins une des faces du support flexible.

Par ailleurs, la réduction du misting améliore de façon significative les conditions d'hygiène et de sécurité pour le personnel en poste auprès de dispositifs industriels d'enduction silicone sur cylindres fonctionnant à grande vitesse.

L'invention sera mieux comprise à la lumière des exemples qui suivent.

## EXEMPLES

Dans ces exemples, la viscosité est mesurée à l'aide d'un viscosimètre BROOKFIELD selon les indications de la norme AFNOR NFT 76 106 de mai 1982.
Oxyde de titane traité NM 400™": il s'agit en fait d'oxyde de titane traité Hombitec RM 400 ™ de la société Hombitec
Le tableau 1 ci-après donne des informations sur les PAB mises en oeuvre dans les exemples.

**TABLEAU 1 : PAB MISES EN OEUVRE DANS LES EXEMPLES**

| Nature | Désignation nom commercial | Fournisseur | Taille $D_{50}$ ($\mu$m) | Technique Détermination | Surface spécifique (Ss) BET ($m^2$/g) |
|---|---|---|---|---|---|
| Talc | Finntalc TM $MO_3$ | MONDOMINERALS | 1,0 | Sédimentation (Sedigraph 5100) | 10-15 |
| Talc | Steamic 00S™ | LUZENAC GROUP | 1,8 | Sédimentation (Sedigraph 5100) | 11-13 |
| Talc | WCD 2610 | WHITTAKER | 0,8 | Sédimentation (Sedigraph 5100) | 10-15 |
| Talc | 1745 | WHITTAKER | 5,5 | Sédimentation (Sedigraph 5100) | 4-6 |
| Talc | Finntalc M40 | MONDOMINERALS | 15,0 | Sédimentation (Sedigraph 5100) | 2-4 |
| Kaolin | WCD 2474 | MONDOMINERALS | 1,4 | Sédimentation (Sedigraph 5100) | 7-9 |
| Silice 170 Précipitée | FK 383 DS | DEGUSSA | 5,0 | Diffraction Laser (Coultronics Ls 130) | 170 |
| Silice 200 Pyrogénée | A 200 | DEGUSSA | 0,2 | Diffraction Laser (Coultronics Ls 130) - | 200 |
| $TiO_2$ | Nm 400™ | HOMBITEC | - | - | - |

### EXEMPLES (1-10) : Influence du taux de PAB en talc

### Dispositif mis en oeuvre

Pour analyser et quantifier le brouillard produit dans un dispositif d'enduction à cylindres fonctionnant à grande vitesse, on a mis en oeuvre à l'échelle du laboratoire un dispositif à 2 rouleaux fonctionnant de manière reproductible à une vitesse linéaire comprise entre 0 et 900 m/min. Par ailleurs, un projecteur de lumière suffisamment puissant est installé de sorte d'éclairer l'ensemble des 2 cylindres et de pouvoir observer à partir de quelle vitesse de rotation des cylindres le brouillard devient visuellement détectable.
Les 2 cylindres présentent un diamètre de 10 cm. L'un des cylindres est recouvert de caoutchouc et l'autre cylindre est chromé. Le cylindre caoutchouc a été taillé en haltère de sorte que la vitesse des deux cylindres soit synchrone. Ces cylindres entraînables par un moteur, sont en contact sous pression constante. Le liquide silicone d'enduction est versé directement dans l'entrefer entre les deux cylindres. La quantité de fluide utilisée est de 1 ml.
Différentes compositions ont ensuite été préparées en mélangeant un polymère silicone:

- soit un polymère P1 de polydiméthylsiloxane dont les extrémités sont bloquées par un groupe diméthylvinylsiloxy et dont la viscosité est de 600 mPa.s environ,
- soit un polymère P2 de polydiméthylsiloxane dont les extrémités sont bloquées par un groupe diméthylvinylsiloxy et dont la viscosité est de 220 mPa.s,
- et diverses charges particulaires.

Le mélange ainsi obtenu est homogénéisé au roule-fût pendant au moins trois heures. On utilise ensuite le système rotatif décrit au paragraphe précédent sur les rouleaux duquel on étale le préparation en question. On augmente ensuite progressivement la vitesse de rotation des rouleaux et on note la vitesse tangentielle à partir de laquelle on détecte visuellement l'apparition du brouillard. Le tableau 2 ci-dessous rassemble les résultats obtenus.

**TABLEAU 2 : INFLUENCE DU TAUX DE PAB**

| | Polymère Pi (i=1 ou i = 2) | Nature des Particules Anti-brouillard (PAB) | Pourcentage de PAB (%) | VISCOSITE (mPa.s) | MISTING (m/min) |
|---|---|---|---|---|---|
| Exemple 1 | Polymère P1 (Témoin) | - | | 640 | 140 |
| Exemple 2 | Polymère P1 | Talc Finntalc M03™ | 1 | 600 | 210 |
| Exemple 3 | Polymère P1 | Talc Finntalc M03™ | 2 | 660 | 260 |
| Exemple 4 | Polymère P1 | Talc Finntalc M03™ | 3 | 780 | 230 |
| Exemple 5 | Polymère P1 | Talc Finntalc M03™ | 5 | 1040 | 220 |
| Exemple 6 | Polymère P1 | Talc Finntalc M03™ | 8 | 1400 | 310 |
| Exemple 7 | Polymère P1 | Talc Steamic OOS™ | 1 | 660 | 200 |
| Exemple 8 | Polymère P1 | Talc Steamic OOS™ | 2 | 700 | 235 |
| Exemple 9 | Polymère P1 | Talc Steamic OOS™ | 5 | 740 | 250 |
| Exemple 10 | Polymère P1 | Talc Steamic OOS™ | 8 | 780 | 300 |

Les exemples 2 à 10, comparés à l'exemple 1 montrent que l'ajout de particules solides dans une composition silicone permet de retarder la vitesse à laquelle le brouillard apparaît et que, par-là même, ces particules solides peuvent être considérées comme des agents réducteurs de brouillard.

**EXEMPLES 11 à 15 : Influence du taux de PAB en silice**

On verse dans un mélangeur fabriqué par la société Janke & Kunkel IKA-Labortechnik un polymère silicone P2 de polydiméthylsiloxane dont les extrémités sont bloquées par un groupe diméthylvinylsiloxy dont la viscosité est de 200 mPa.s. On incorpore à température ambiante par petites quantités de la silice A 200™ jusqu'à ce que le mélange soit constitué de 10% en poids de silice A 200 et de 90% en poids de polymère P2 tout en maintenant une agitation au moyen d'un mobile dont la vitesse de rotation est de 100 tr/min environ. Le temps d'incorporation dure environ ½ heure. Une fois l'incorporation terminée, on maintient l'agitation pendant encore une heure supplémentaire à température ambiante. On chauffe ensuite le mélange à 150°C pendant trois heures tout en maintenant l'agitation. Au bout de ces trois heures, on obtient un mélange M1 contenant 10% de silice qu'on laisse refroidir.

On verse dans un mélangeur fabriqué par la société Janke & Kunkel IKA-Labortechnik un polymère silicone

P2 de polydiméthylsiloxane dont les extrémités sont bloquées par un groupe diméthylvinylsiloxy dont la viscosité est de 200 mPa.s. On incorpore à température ambiante par petites quantités de la silice traitée en surface par de l'octaméthylcyclotétrasiloxane (D4), jusqu'à ce que le mélange soit constitué de 10% en poids de silice traitée et de 90% en poids de polymère P2 tout en maintenant une agitation au moyen d'un mobile dont la vitesse de rotation est de 100 tr/min environ. Le temps d'incorporation dure environ ½ heure. Une fois l'incorporation terminée, on maintient l'agitation pendant encore une heure supplémentaire à température ambiante. On chauffe ensuite le mélange à 150°C pendant trois heures tout en maintenant l'agitation. Au bout de ces trois heures, on obtient un mélange M2 contenant 10% de silice traitée qu'on laisse refroidir.

On mélange au moyen d'un roule-fût pendant 3 heures 90 parties en poids du polymère P2 et 10 parties en poids du mélange M1; on obtient le bain B1 contenant 1 % de silice.

On mélange au moyen d'un roule-fût pendant 3 heures 70 parties en poids du polymère P2 et 30 parties en poids du mélange M1; on obtient le bain B1-bis contenant 3% de silice.

On mélange au moyen d'un roule-fût pendant 3 heures 90 parties en poids du polymère P2 et 10 parties en poids du mélange M2; on obtient le bain B2 contenant 1% de silice.

On mélange au moyen d'un roule-fût pendant 3 heures 70 parties en poids du polymère P2 et 30 parties en poids du mélange M2; on obtient le bain B2-bis contenant 3% de silice.

On utilise ensuite le système rotatif décrit au paragraphe précédent sur les rouleaux duquel on étale successivement 0,25 ml des préparations B1, B1-bis, B2 et B2-bis en question. On augmente ensuite progressivement la vitesse de rotation des rouleaux et on note la vitesse tangentielle à partir de laquelle on détecte visuellement l'apparition du brouillard. Le tableau 3 ci-dessous rassemble les résultats obtenus.

**TABLEAU 3 : INFLUENCE DU TAUX DE PAB EN SILICE**

| | PRODUITS | Nature des Particules Anti-brouillard (PAB) | Pourcentage de PAB (%) | VISCOSITE (mPa.s) | MISTING (m/min) |
|---|---|---|---|---|---|
| Exemple 11 | Polymère P2 (Témoin) | - | 0 | 200 | 261 |
| Exemple 12 | Bain B1 | Silice A 200™ | 1 | 240 | 368 |
| Exemple 13 | Bain B1 Bis | Silice A 200™ | 3 | 320 | 385 |
| Exemple 14 | Bain B2 | Silice traitée D4 en surface | 1 | 280 | 353 |
| Exemple 15 | Bain B2 Bis | Silice traitée D4 en surface | 3 | 384 | 333 |

Les exemples 12 à 15 comparés à l'exemple 11 montrent que l'ajout de PAB de silice dans une composition silicone permet de retarder la vitesse à laquelle le brouillard apparaît et que, par là-même, ces particules solides peuvent être considérées comme des agents réducteurs de brouillard.

**EXEMPLES 16 à 20 : Influence de la taille des PAB en talc**

Les essais sont faits au mélangeur RAYNERI avec un POS de 700 mPa.s de viscosité. L'outil utilisé est une simple hélice tripale tournant à la vitesse de 840 tr/min. L'incorporation de la charge et l'homogénéisation du mélange se font à température ambiante en 15 minutes.

Les mélanges ainsi réalisés sont testés immédiatement sur l'installation décrite ci-dessus.
La quantité de liquide silicone d'enduction mise en oeuvre est de 1 ml.
Le tableau 4 ci-dessous rassemble les résultats obtenus.

**TABLEAU 4 : INFLUENCE DE LA TAILLE DES PAB**

| Exemples | Polymère | Nature des PAB | Taux(%) | Viscosité (mPa.s) | Misting vitesse à laquelle le brouillard est visuellement détecté (m/min) |
|---|---|---|---|---|---|
| Exemple 16 | P1 | Témoin | 0 | 700 | 120 |
| Exemple 17 | P1 | Talc micronisé WCD 2610 | 3 | 830 | 170 |
| Exemple 18 | P1 | Talc FinnTalc MO3 | 3 | 820 | 175 |
| Exemple 19 | P1 | Talc 1745 | 3 | 780 | 170 |
| Exemple 20 | | Talc FinnTalc M40 | 3 | 720 | 120 |

Ce tableau illustre très bien le rôle joué par la taille des particules pour un même taux et une même nature d'additif. Pour des viscosités qui sont très peu affectées par la présence de la charge (plus celle-ci est fine, plus elle accroît la viscosité du milieu silicone), on remarquera que la vitesse d'apparition du misting est retardée lorsque la granulométrie reste inférieure à 5 µm.

La comparaison des exemples 17, 18, 19 et des exemples 16 et 20 montrent que les PAB de taille comprise entre 0,8 et 5,0 µm réduisent le misting par rapport au cas où l'on n'a pas des particules de talc de taille $D_{50}$ égale à 15 µm.

**EXEMPLES 21 à 27 : Influence de la nature des PAB**

Les conditions de préparation des produits du tableau 5 sont les mêmes que ci-dessus.

**TABLEAU 5 : INFLUENCE DE LA NATURE DES PAB**

| Exemples | Polymère | Nature des PAB | Taux (%) | Viscosité (mPa.s) | Misting (m/min) |
|---|---|---|---|---|---|
| Exemple 21 | P1 (témoin) | | 0 | 700 | 120 |
| Exemple 22 | P1 | Talc FinnTalc MO3 | 3 | 820 | 175 |
| Exemple 23 | P1 | Kaolin WCD 2474 | 3 | 760 | 190 |
| Exemple 24 | P1 | Silice précipitée FK 383 DS | 1 | 820 | 175 |
| Exemple 25 | P1 | Silice de combustion A200 | 1 | 1690 | 170 |
| Exemple 26 | P1 (témoin) | | | 610 | 120 |
| Exemple 27 | P1 | Dioxide de titane traité NM 400™ | 3 | 800 | 190 |

Ce sont là 5 exemples de PAB d'origine et/ou de nature chimique différente, ayant également des facteurs de forme différents mais dont la taille reste inférieure à 5 µm. Ces PAB permettent de retarder l'apparition du phénomène de misting.

**EXEMPLES (28-34) : Essais industriels silicone polyaddition**

On prépare sept bains de la façon suivante.
Le bain 1 est obtenu en mélangeant successivement les produits suivants:

- un polymère 1 de polydiméthylsiloxane dont les extrémités sont bloquées par un groupe diméthylvinylsiloxy dont la viscosité est de 200 mPa.s et contenant moins de 0.20% d'éthynylcyclohexanol-1,
- un mélange d'huiles constituées de copolymères de polyhydrogenométhylsiloxane et de polydiméthylsiloxane, les deux types de copolymères étant bloquées par des groupes triméthylsiloxanne,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total

en moles de groupements vinyles et le nombre total en mole de groupements hydrogénosiloxane de 1.75, une concentration en platine de 110 ppm et un taux d'éthynylcyclohexanol-1 de l'ordre de 0.15%. La viscosité du mélange obtenu est de 205 mPa.s environ.

Le bain 2 est obtenu en mélangeant successivement les produits suivants:

- un polymère 2 de polydiméthylsiloxane dont les extrémités sont bloquées par un groupe diméthylvinylsiloxy dont la viscosité est de 150 mPa.s et contenant moins de 0.20% d'éthynylcyclohexanol-1,
- un mélange d'huiles constituées de copolymères de polyhydrogenométhylsiloxane et de polydiméthylsiloxane, les deux types de copolymères étant bloqués par des groupes triméthylsiloxanne,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxane de 1.75, une concentration en platine de 110 ppm et un taux d'éthynylcyaohexanol-1 de l'ordre de 0.15%. La viscosité du mélange obtenu est de 158 mPa.s environ.

Le bain 3 est obtenu en mélangeant successivement les produits suivants:

- un polymère 3 de polydiméthylsiloxane dont les extrémités sont bloquées par un groupe diméthylvinylsiloxy dont la viscosité est de 100 mPa.s et contenant moins de 0.20% d'éthynylcyclohexanol-1,
- un mélange d'huiles constituées de copolymères de polyhydrogenométhylsiloxane et de polydiméthylsiloxane, les deux types de copolymères étant bloqués par des groupes triméthylsiloxanne,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxane de 1.75, une concentration en platine de 110 ppm et un taux d'éthynylcyclohexanol-1 de l'ordre de 0.15%. La viscosité du mélange obtenu est de 110 mPa.s environ.

Le bain 4 est obtenu en mélangeant successivement les produits suivants:

- un polymère 4 de polydiméthylsiloxane dont les extrémités sont bloquées par un groupe diméthylvinylsiloxy dont la viscosité est de 50 mPa.s et contenant moins de 0.20% d'éthynylcyclohexanol-1,
- un mélange d'huiles constituées de copolymères de polyhydrogenométhylsiloxane et de polydiméthylsiloxane, les deux types de copolymères étant bloqués par des groupes triméthylsiloxanne,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxane de 1.75, une concentration en platine de 110 ppm et un taux d'éthynylcyclohexanol-1 de l'ordre de 0.15%. La viscosité du mélange obtenu est de 78 mPa.s environ.

Le bain 5 est obtenu de la façon suivante.

On verse dans un mélangeur fabriqué par la société Janke & Kunkel IKA-Labortechnik le polymère 1 ayant servi à préparer le bain 1. On incorpore à température ambiante par petites quantités de la silice A 200™ jusqu'à ce que le mélange soit constitué de 10% en poids de silice A 200 et de 90% en poids de polymère P1 tout en maintenant une agitation au moyen d'un mobile dont la vitesse de rotation est de 100 tr/min environ. Le temps d'incorporation dure environ ½ heure. Une fois l'incorporation terminée, on maintient l'agitation pendant encore une heure supplémentaire à température ambiante. On chauffe ensuite le mélange à 150°C pendant trois heures tout en maintenant l'agitation. Au bout de ces trois heures, on obtient un mélange 5.1 contenant 10% de silice qu'on laisse refroidir. On mélange dans 3,6 kg du polymère 1 ayant servi à préparer le bain 10,4 kg du mélange 5.1 et l'on obtient un mélange 5.2.

Le bain 5 est obtenu en mélangeant successivement les produits suivants:

- le mélange 5.2,
- un mélange d'huiles constituées de copolymères de polyhydrogenométhylsiloxane et de polydiméthylsiloxane, les deux types de copolymères étant bloqués par des groupes triméthylsiloxane,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxanne de 1,75, une concentration en platine comprise entre 110 ppm et un taux d'éthynylcyclobexanol-1 de l'ordre de 0,15%. La viscosité du bain 5 obtenu est de 290 mPa.s environ.

Le bain 6 est obtenu de la façon suivante.

On incorpore dans le polymère 1 ayant servi à préparer le bain 1 9% de talc Finntalc MO3™ que l'on disperse au moyen d'un mélangeur Turrax™. On obtient un mélange 6.1 de viscosité 600 mPa.s environ. On mélange dans 6.7 kg du polymère 1 ayant servi à préparer le bain 13.3 kg du mélange 6.1 et l'on obtient un mélange 6.2.
Le bain 6 est obtenu en mélangeant successivement les produits suivants:

- le mélange 6.2,
- un mélange d'huiles constituées de copolymères de polyhydrogenométhylsiloxane et de polydiméthylsiloxane, les deux types de copolymères étant bloqués par des groupes triméthylsiloxane,
- un catalyseur contenant du Pt de degré d'oxydation zéro appelé communément catalyseur de Karsted et mis en solution dans du divinyltétraméthyldisiloxane.

Les proportions du mélange sont calculées de sorte que l'on obtienne dans le bain final un rapport entre le nombre total en moles de groupements vinyles et le nombre total en mole de groupements hydrogénosiloxanne 1.75, une concentration en platine de 110 ppm et un taux d'éthynylcyclohexanol-1 de l'ordre de 0.15%. La viscosité du bain 6 obtenu est de 250 mPa.s environ.

Le bain 7 est obtenu de la façon suivante.
On incorpore dans le polymère 1 ayant servi à préparer le bain 1 7% de talc Steamic 00S™ que l'on disperse au moyen d'un mélangeur Turrax™. On obtient un mélange 7.1 de viscosité 440 mPa.s environ. On mélange dans 5.7 kg du polymère 1 ayant servi à préparer le bain 1 4.3 kg du mélange 7.1 et l'on obtient un mélange 7.2.
Le bain 7 est obtenu en mélangeant successivement les produits suivants:

- le mélange 7.2,
- un mélange d'huiles constituées de copolymères de polyhydrogenométhylsiloxane et de polydiméthylsiloxane, les deux types de copolymères étant bloqués par des groupes triméthylsiloxane,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxanne 1.75, une concentration en de 110 ppm et un taux d'éthynylcyclohexanol-1 de l'ordre de 0.15%. La viscosité du bain 6 obtenu est de 248 mPa.s environ.

Ces sept bains sont ensuite utilisés successivement pour enduire un support de papier (glassine de 62g/$m^2$) fourni par la société Ahlström au moyen d'une machine dont la tête d'enduction est une tête munie de quatre cylindres humides. En aval de cette tête, une sécherie dans laquelle circule de l'air à 195°C environ est utilisé pour faire durcir l'enduit de silicone en le portant à une température maximale comprise entre 130 et 160°C.

On procède ensuite à l'opération d'enduction en utilisant successivement les bains 1, 2, 3, 4, 5, 6 et 7 décrits ci-dessus. La vitesse de défilement du papier et la vitesse tangentielle du cylindre enducteur, pour chaque bain, varie de 300 m/min à 900 m/min afin d'évaluer l'effet de la composition du bain sur la densité du brouillard. La densité du brouillard est évaluée de deux façons.

1°) On utilise une méthode qualitative qui consiste à augmenter progressivement la vitesse de défilement du papier et à relever la vitesse à partir de laquelle le brouillard devient visible (sans effort particuliers).

2°) On utilise une méthode quantitative consistant à augmenter progressivement la vitesse de défilement du papier et à mesurer la densité du brouillard émis au voisinage de la tête d'enduction. Pour se faire, on dispose à dix centimètres environ du lieu de contact entre le dernier cylindre humide de la tête d'enduction et le papier enduit c'est-à-dire là où le papier défile entre le cylindre enducteur et le cylindre presseur un appareil servant à mesurer le brouillard; cet intrument de mesure est un compteur de particules appelé aussi néphélomètre et dont le principe de fonctionnement repose sur un système optique permettant de mesurer par diffraction ou par un principe équivalent le nombre de particules traversant un faisceau de lumière. L'appareil délivrant un nombre de particules supérieur à une taille donnée par le biais de 15 canaux de mesure correspondant chacun à des tailles s'échelonnant entre 0,3 μm et 20 μm, on réalise le calcul décrit ci-dessous pour évaluer la densité d du brouillard. Si ni (1/1) est le nombre de particules par unité de volume détecté par le i-ème canal dont la taille est supérieure à Φi (μm), la densité

d (mg/m3) du brouillard est recalculé par la formule suivante:

$$d = \frac{(-0.8/1000000)*\Sigma((ni+1-ni)*((((\Phi i + \Phi i+1)/2))^{3})*(\Pi/6))}{i}$$

Le TABLEAU 6 ci-dessous rassemble les résultats obtenus:

**TABLEAU 6 : ESSAIS SUR INSTALLATION INDUSTRIELLE SILICONE POLYADDITION**

| Exemple | Désign ation du bain | Viscosité du bain (mPa.s) | Dépôt de silicone (g/m$^2$) | PAB | Vitesse à laquelle le brouillard est visuellement détecté (m/min) | Vitesse à laquelle la densité du brouillard est mesurée (m/min) | Densité du brouillard mesuré à la vitesse correspondante (mg/m3) | Niveau d'anti-adhérence obtenu et mesuré selon la méthode FTM 10 |
|---|---|---|---|---|---|---|---|---|
| Exemple 28 | Bain 1 | 205 | 1,18-1,22 | - | 400 | 600 | 38 | 5.6cN/25mn |
| Exemple 29 | Bain 2 | 158 | 0,98-1,05 | - | 500 | 600 | 24 | - |
| Exemple 30 | Bain 3 | 110 | 0,96 | - | 600-700 | 800 | 16 | - |
| Exemple 31 | Bain 4 | 79 | 0,81 | - | 700-800 | 800 | 12 | 11.4cN/25m n |
| Exemple 32 | Bain 5 | 290 | 1,28-1,33 | Silice A200 | 780 | 800 | 15 | 4.4cN/25mn |
| Exemple 33 | Bain 6 | 250 | 1,02 | Talc Finntalc MO3™ | 600 | 600 | 5 | 6.8Cn/25mn |
| Exemple 34 | Bain 7 | 248 | 1,25 | Talc Steamic OOS™ | 500 | 600 | 20 | - |

Les exemples 28 à 31 montrent que la densité du brouillard décroît lorsque la viscosité du bain d'enduction décroît.

Les exemples 32 à 34 montrent que la présence de particules solides dans le bain d'enduction permet de réduire l'intensité du brouillard ou que, ce qui est équivalent, l'ajout de particules solides dans un bain d'enduction permet d'atteindre une vitesse de fonctionnement de la machine plus élevé qu'en l'absence de particules solides pour une même densité de brouillard indépendamment de la viscosité du bain.

Mise en évidence de l'effet positif du procédé selon l'invention sur la couverture du revêtement silicone obtenu dans les exemples 33 et 34.

La surface siliconée des échantillons est mise en contact pendant 30 secondes avec une solution aqueuse contenant du vert de Malachite. La coloration ainsi obtenue est révélatrice de la couverture du papier par la silicone c'est-à-dire de la qualité et de la continuité de la couche silicone. Ainsi, si la coloration est forte, le colorant a pu traverser la couche silicone facilement et la couverture est qualifiée de mauvaise. En revanche, si la coloration est faible ou inexistante, le colorant n'a pas pu ou a peu traversé la couche silicone ce qui signifie que la couverture est bonne. Cette caractéristique est utile à l'homme de l'art car elle lui permet d'évaluer la qualité de l'enduction en regard des propriétés anti-adhérentes et/ou, ce qui est équivalent, le bilan économique de l'opération de siliconage car une composition silicone conduisant à une bonne couverture permet de réduire la quantité de silicone utilisée. En particulier, ici, il a été observé que la couverture s'améliore parallèlement avec la réduction du misting. Ceci s'interprète en considérant que le misting est lié à une perturbation de la couche silicone au point de contact entre le support et le rouleau enducteur c'est-à-dire que l'apparition de gouttelettes d'aérosol est générée par la rupture de fils liquides ("threading" en anglais). Lorsque l'on diminue le misting grâce à l'utilisation des PAB décrits ci-dessus, on limite en fait l'extension des fils et autres perturbations à l'origine du misting. On comprend donc que si l'on réduit grâce à l'utilisation des PAB décrits ci-dessus le misting et concomittamment les perturbations de la couche d'enduction, la couverture s'améliore de la même façon.

**EXEMPLES 35 à 42 : Essais industriels silicone réticulable sous UV**

Dans un produit composé majoritairement d'un polymère de polydiméthylsiloxane sur la chaîne duquel sont greffés des groupements époxy et de viscosité 350 mPa.s environ, de formule:

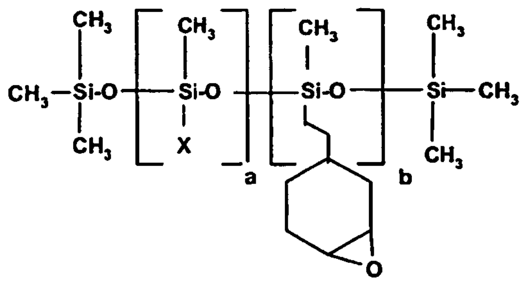

x=$CH_3$ ; a =70 ; b=7,

on incorpore 3% de silice de pyrogénation A 200™ que l'on disperse au moyen d'un mélangeur Turrax™. On obtient un mélange ADD1 de viscosité 760 mPa.s environ.

On incorpore, dans un polymère composé majoritairement d'un polymère de polydiméthylsiloxane sur la chaîne duquel sont greffés des groupements acrylates et de viscosité 700 mPa.s environ,

3% de silice de pyrogénation A 200™ que l'on disperse au moyen d'un mélangeur Turrax™. On obtient un mélange ADD2 de viscosité 1680 mPa.s environ.

Le bain 1 est obtenu en mélangeant les composés suivants:

- 95 parties d'un produit un produit composé majoritairement d'un polymère de polydiméthylsiloxane sur la chaîne duquel sont greffés des groupements époxy et de viscosité 350 mPa.s environ, de formule:

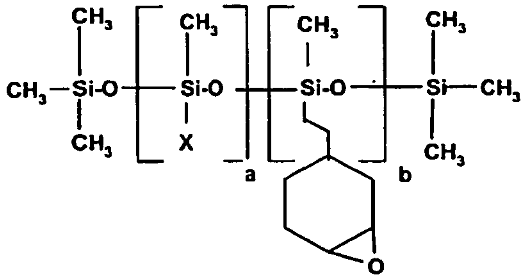

$x=CH_3$ ; a =70 ; b=7,

- 2,5 parties du catalyseur constitué d'une solution à 18% en poids dans l'alcool isopropylique d'un produit de formule:

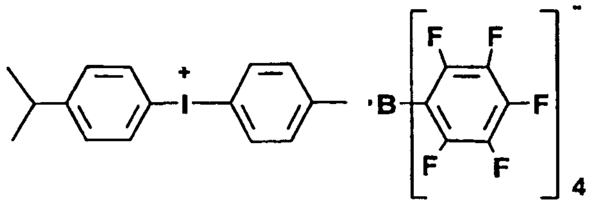

- 5 parties d'un produit composé majoritairement d'un polymère de polydiméthylsiloxane sur la chaîne duquel sont greffés des groupements époxy et de viscosité 600 mPa.s environ.

Le bain 2 est obtenu en mélangeant les composés suivants:

- 61 parties d'un produit composé majoritairement d'un polymère de polydiméthylsiloxane sur la chaîne duquel sont greffés des groupements époxy et de viscosité 350 mPa.s environ,
- 34 parties du mélange ADD1,
- 2,5 parties du catalyseur constitué d'une solution à 18% en poids dans l'alcool isopropylique d'un produit de formule:

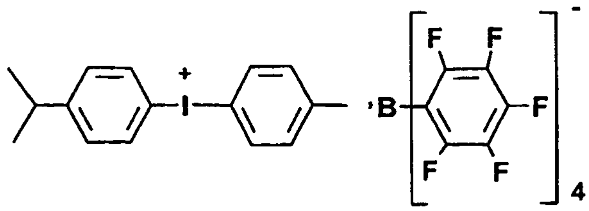

- et 5 parties d'un produit composé majoritairement d'un polymère de polydiméthylsiloxane sur la chaîne duquel sont greffés des groupements époxy et de viscosité 600 mPa.s environ.

Le bain 3 est obtenu en mélangeant les composés suivants:

- 90 parties d'un polymère composé majoritairement d'un polymère de polydiméthylsiloxane sur la chaîne duquel sont greffés des groupements acrylates et de viscosité 700 mPa.s environ,
- 10 parties d'un polymère composé majoritairement d'un polymère de polydiméthylsiloxane sur la chaîne duquel sont greffés des groupements acrylates et de viscosité 250 mPa.s environ, et
- 2 parties d'un photoamorceur du commerce opérant sous irradiation par le biais de radicaux libres, à base d'un mélange de cétones $\alpha$-hydroxylées.

Le bain 4 est obtenu en mélangeant les composés suivants:

- 56 parties d'un polymère composé majoritairement d'un polymère de polydiméthylsiloxane sur la chaîne duquel sont greffés des groupements acrylates et de viscosité 700 mPa.s environ,

- 34 parties du mélange ADD2,
- 10 parties d'un polymère composé majoritairement d'un polymère de polydiméthylsiloxane sur la chaîne duquel sont greffés des groupements acrylates et de viscosité 250 mPa.s environ,
- 2 parties d'un photoamorceur du commerce opérant sous irradiation par le biais de radicaux libres, à base d'un mélange de cétones $\alpha$-hydroxylées.

Les bains 1 et 2 sont ensuite utilisés successivement pour enduire un support de papier glassine au moyen d'une machine dont la tête d'enduction est une tête munie de quatre cylindres humides. De même, les bains 3 et 4 sont utilisés successivement pour enduire un support de papier supercalendred kraft au moyen de la même machine. En aval de cette tête, on dispose de lampes UV dans le but de faire durcir la composition silicone sachant que les lampes UV fonctionnent sous atmosphère d'azote dans le cas des bains 3 et 4.

On procède ensuite à l'opération d'enduction en utilisant successivement les bains 1, 2, 3 et 4 décrits ci-dessus. La vitesse de défilement du papier et la vitesse tangentielle du cylindre enducteur, pour chaque bain, est soit de 400 m/min, soit de 600 m/min, soit de 1000 m/min ceci afin d'évaluer l'effet de la composition du bain sur la densité du brouillard. La densité du brouillard est évaluée de la façon suivante.

On dispose à dix centimètres environ du lieu de contact entre le dernier cylindre humide de la tête d'enduction et le papier enduit c'est-à-dire là où le papier défile entre le cylindre enducteur et le cylindre presseur un appareil servant à mesurer le brouillard; cet instrument de mesure est un compteur de particules appelé aussi néphélomètre. Son principe de fonctionnement repose sur un système optique permettant de mesurer par diffraction ou par un principe équivalent le nombre de particules traversant un faisceau de lumière. L'appareil délivrant un nombre de particules supérieur à une taille donnée par le biais de 8 canaux de mesure correspondant chacun à des tailles s'échelonnant entre 0,75 $\mu$m et 15 $\mu$m, on réalise le calcul décrit ci-dessous pour évaluer la densité d du brouillard. Si ni (1/1) est le nombre de particules par unité de volume détecté par le i-ème canal dont la taille est supérieure à $\Phi$i ($\mu$m), la densité d (mg/m3) du brouillard est recalculée par la formule suivante:

$$d = (-0.8/1000000) * \sum_{i} ((ni+1-ni) * (((( \Phi i + \Phi i+1)/2))\text{^}3) * (\Pi/6))$$

Le TABLEAU 7 ci-dessous rassemble les résultats obtenus:

**TABLEAU 7 : ESSAIS INDUSTRIELS SILICONE RETICULABLE SOUS UV**

| | Désignation du bain | Viscosité du bain (mPa.s) | Dépôt de silicone (g/m$^2$) | Vitesse à laquelle la densité du brouillard est mesurée (m/min) | Densité du brouillard mesuré à la vitesse corres-pondante (mg/m3) | Niveau d'anti-adhérence obtenu et mesuré après 1 mois de stockage |
|---|---|---|---|---|---|---|
| Exemple 35 | Bain 1 | 360 | 1,35 | 600 | 4,8 | 17,1 g/cm |
| Exemple 36 | Bain 1 | 360 | 1,55 | 1000 | 65,3 | 20,4 g/cm |
| Exemple 37 | Bain 2 | 430 | 1,53 | 600 | 3,4 | 12,6 g/cm |
| Exemple 38 | Bain 2 | 430 | 1,59 | 1000 | 12,3 | 19,6 g/cm |
| Exemple 39 | Bain 3 | 860 | 1,48 | 400 | 30,3 | 12,6 g/cm |
| Exemple 40 | Bain 3 | 860 | 1,30 | 600 | 84,0 | 16,5 g/cm |
| Exemple 41 | Bain 4 | 1350 | 1,68 | 400 | 5,4 | 10,7 g/cm |
| Exemple 42 | Bain 4 | 1350 | 1,61 | 600 | 13,3 | 17,5 g/cm |

L'exemple 35 comparé à l'exemple 37, l'exemple 36 comparé à l'exemple 38, l'exemple 39 comparé à l'exemple 41 et l'exemple 40 comparé à l'exemple 42 montrent que l'utilisation de silice permet de diminuer le misting. Ces mêmes exemples montrent aussi que l'utilisation de silice, loin de nuire aux propriétés anti-adhérentes du revêtement silicone, dans certains cas, permet de l'améliorer.

Ces exemples, comparés aux exemples précédents 30 à 36, montrent que la silice permet de réduire le misting

des silicones de façon indépendante du type de groupements chimiques greffés sur le polymère silicone et indépendamment du mécanisme chimique qui régit leur réaction.

**EXEMPLES 43 à 47 : Application aux têtes d'enduction avec cylindre gravé**

Le procédé selon l'invention s'applique également à des têtes d'enduction munis d'un cylindre gravé et, de préférence, un second cylindre dit cylindre "off-set". Ces têtes d'enduction sont composées d'un cylindre gravé dont les caractéristiques de gravure c'est-à-dire le nombre de godets par unité de surface, la taille et la profondeur de ces godets sont telles que l'on peut atteindre le poids de couche recherché. Ce cylindre gravé est muni d'un dispositif d'alimentation en silicone, par exemple une chambre d'alimentation munie de lames râclantes. Ce cylindre gravé est en contact avec un cylindre de caoutchouc dit cylindre "off-set". Le réglage de ces têtes d'enduction est connu de l'homme de l'art. En général, on utilise un différentiel de vitesse entre le cylindre gravé et le cylindre "off-set" permettant de stabiliser la quantité de silicone déposée sur le matériau flexible que l'on veut enduire. Le cylindre "off-set" possède, en général, une vitesse de rotation telle que sa vitesse tangentielle est voisine de celle de défilement du matériau flexible à enduire.
Les mesures, présentées dans ces exemples, ont été réalisées au moyen d'une tête d'enduction de ce type fabriquée par la société Polytype SA. Cette tête a été utilisée pour enduire un papier supercalendré de la société Wassau au moyen de quatre formules afin de comparer leur propension au misting.
Les bains 1 à 3 sont obtenus en mélangeant successivement les produits suivants:

- un polymère 1 de polydiméthylsiloxane dont les extrêmités sont bloquées par un groupe diméthylvinylsiloxy et dont la viscosité est de 200 mPa.s et contenant moins de 0,2% d'éthynylcyclohexanol-1,
- un mélange d'huiles constituées de copolymères de polyhydrogenométhylsiloxane et de polydiméthylsiloxane, les deux types de copolymères étant bloqués par des groupes triméthylsiloxane,
- un catalyseur contenant du platine de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en moles de groupements vinyles et le nombre total en mole de groupements hydrogénosiloxanes de 2,0, une concentration en platine de 90 ppm et un taux d'éthynylcyclohexanol-1 de l'ordre de 0,15%. La viscosité des mélanges obtenus est de 155 à 160 mPa.s environ.
Le bain 4 est obtenu en mélangeant successivement les produits suivants :

- 80 parties du polymère 1 de polydiméthylsiloxane dont les extrêmités sont bloquées par un groupe diméthylvinylsiloxy dont la viscosité est de 200 mPa.s et contenant moins de 0,2% d'éthynylcyclohexanol-1,
- 20 parties d'un additif 1,
- un mélange d'huiles constituées de copolymères de polyhydrogenométhylsiloxane et de polydiméthylsiloxane, les deux types de copolymères étant bloqués par des groupes triméthylsiloxanne,
- un catalyseur contenant du Pt de degré d'oxydation zéro appelé communément catalyseur de Karsted et mis en solution dans du divinyltetraméthyldisiloxane.

Les proportions du mélange sont calculées de sorte que l'on obtienne dans le bain final un rapport entre le nombre total en mole de groupements vinyles et le nombre total en mole de groupements hydrogénosiloxane de 2, une concentration en platine de 90 ppm et un taux d'éthynylcyclohexanol-1 de l'ordre de 0,15%. La viscosité du mélange obtenu est de 225 mPa.s environ.
L'additif 1 est obtenu en dispersant à température ambiante pendant 8 heures dans un réacteur muni d'un agitateur raclant en forme d'ancre :

- 92% d'un polymère de polydiméthylsiloxane dont les extrêmités sont bloquées par un groupe diméthylvinylsiloxy et dont la viscosité est de 100 mPa.s,
- 8% de silice A 200 de Degussa et,
- moins de 0,2% d'éthynylcyclohexanol-1.

On procède ensuite à l'opération d'enduction en utilisant successivement les bains 1, 2, 3 et 4 décrits ci-dessus. La vitesse de défilement du papier et la vitesse tangentielle du cylindre enducteur, pour chaque bain, varient de 200 m/min à 1000 m/min afin d'évaluer l'effet de la composition du bain sur la densité du brouillard.
On utilise une méthode quantitative consistant à augmenter progressivement la vitesse de défilement du papier et à mesurer la densité du brouillard émis au voisinage de la tête d'enduction. Pour se faire, on dispose à dix centimètres environ du lieu de contact entre le dernier cylindre humide de la tête d'enduction et le cylindre gravé un instrument de

mesure qui est un compteur de particules, appelé aussi néphélomètre loué à la société ITS, dont le principe de fonctionnement a déjà été décrit. Le compteur de particules est placé à cet endroit parce qu'il a été remarqué que le brouillard est environ dix fois plus dense au niveau de la ligne de contact entre le cylindre gravé et le cylindre de caoutchouc "off-set" qu'il ne l'est au niveau de la ligne de contact entre le cylindre de caoutchouc "off-set" et le papier enduit, c'est-à-dire encore, là où le papier défile entre le cylindre enducteur et le cylindre presseur.

Les densités de brouillard mesurées aux différentes vitesses sont rassemblées dans le tableau 8 ci-dessous.

**TABLEAU 8 : ESSAIS SUR TÊTE D'ENDUCTION AVEC UN CYLINDRE GRAVÉ**

| | Désignation du bain | Densité de brouillard (mg/m$^3$) mesurée en fonction de la vitesse de défilement du papier | | | |
|---|---|---|---|---|---|
| | | 200 m/min | 500 m/min | 800 m/min | 1000 m/min |
| Exemple 43 | Bain 1 | 7 | 130 | 258 | - |
| Exemple 44 | Bain 2 | 8 | 149 | 187 | - |
| Exemple 45 | Bain 3 | 4 | 115 | 196 | 189 |
| Exemple 46 | Bain 4 | 0 | 6 | 27 | - |
| Exemple 47 | Bain 4 | 1 | 6 | 19 | 30 |

La comparaison des exemples 46 et 47 avec les exemples 43, 44 et 45 montre que présence de silice dans la composition permet de réduire la densité du misting formé. Ces exemples mettent donc en évidence que le procédé selon l'invention permet également de lutter contre la formation de brouillard dans des dispositifs d'enduction comportant au moins un cylindre gravé.

## Revendications

**1.** Procédé de lutte contre l'apparition de brouillard ("misting") lors de l'enduction de supports flexibles, avec au moins une composition silicone liquide précurseur de revêtement(s) silicone, à l'aide d'un dispositif d'enduction à cylindres, la composition liquide comprenant :

-A- au moins un polyorganosiloxane (POS) réticulable par polyaddition, par polycondensation, par voie cationique ou par voie radicalaire
-B- éventuellement au moins un composé organosilicique réticulant
-C- éventuellement au moins un catalyseur de la réaction de réticulation ;
**caractérisé en ce que** l'on met en oeuvre la composition liquide d'enduction obtenue par mélange:

• d'une phase silicone comportant un ou plusieurs POS (A) et éventuellement un ou plusieurs composés (s) (B) (réticulant)
et dont la viscosité η à 25°C est intérieure à 2000 mPa.s, de préférence comprise entre 50 et 1400 mPa.s, et plus préférentiellement encore comprise entre 100 et 1000 mPa.s ;
• avec des particules anti-brouillard non cellulosiques dont la granulométrie donnée par leur $D_{50}$ (en μm) est telle que :

$$D_{50} \leq 10$$

de préférence

$$0,001 \leq D_{50} \leq 5$$

et plus préférentiellement encore

$$0{,}01 \leq D_{50} \leq 2$$

ces particules anti-brouillard étant incorporées dans la composition silicone liquide à raison de 1 à 10% en poids ;
• et éventuellement avec un composé liquide (D) constitué :

i. par un diluant et/ou un solvant consistant dans un composé organique non organosilicique ou organosilicique, capable ou non de réagir avec le (ou les) composé(s)(A),
ii. et/ou par de l'eau dans le cas de la mise en oeuvre d'un système en émulsion.

**2.** Procédé selon la revendication 1, **caractérisé en ce que** les particules anti-brouillard sont sélectionnées dans le groupe comprenant :

- noir de carbone
- $SiO_2$
- $CaCO_3$
- $TiO_2$
- $BaSO_4$
- $Al_2O_3$
- chaux
- talc
- mica
- quartz broyé
- argiles naturelles ou synthétiques (vermiculite expansée ou non, kaolin)
- poudres à base de polymères(s) synthétique(s) autre(s) qu'un polymère cellulosique
- terres de diatomées
- et leurs mélanges

le silice, le kaolin le talc, $TiO_2$ étant particulièrement préférés ;
ces particules ayant éventuellement subi un traitement de surface.

**3.** Procédé selon la revendication 1 ou la revendication 2, **caractérisé en ce que** les particules ont une surface spécifique (Ss) BET comprise entre 0,5 $m^2$/g et 500 $m^2$/g, de préférence entre 2 et 400 $m^2$/g, et plus préférentiellement encore entre 50 et 300 $m^2$/g.

**4.** Procédé selon l'une quelconque des revendications 1 à 3, **caractérisé en ce que** l'on mélange au moins une partie de la phase silicone avec tout on partie des particules anti-brouillard se présentant sous forme sèche pulvérulente et/ou sous forme de suspension dans un liquide (organique ou aqueux), de préférence sous forme sèche pulvérulente.

**5.** Procédé selon l'une quelconque des revendications 1 à 4, **caractérisé en ce que**:

• soit on mélange de façon progressive la totalité des particules anti-brouillard avec la phase silicone sous forme continue ou dispersée ;
• soit on mélange de façon progressive la totalité des particules anti-brouillard avec une fraction du POS (A), ce mélange intermédiaire étant ensuite mélangé avec la phase silicone, sous forme continue ou dispersée, comprenant la fraction résiduelle de la phase silicone.

**6.** Procédé selon l'une quelconque des revendications 1 à 5, **caractérisé en ce que** le mélange phase silicone/particules and-brouillard s'opére à l'aide d'un mélangeur classique, connu pour être dispersant dans des milieux fluides en opérant à température ambiante.

**7.** Procédé selon l'une quelconque des revendications 1 à 5, **caractérisé**:

o en ce que l'on utilise des particules anti-brouillard à base de silice de pyrogénation et/ou de précipitation, traitée ou non,

o en ce que, dans un premier temps, on mélange-de manière progressive-une partie de la phase silicone-sons fornie continue-avec les particules anti-brouillard siliceuses dans un mélangeur classique, connu pour être dispensant dans des milieux fluides et dont la vitesse de rotation est comprise entre 50 et 500 tr/min, de préférence entre 80 et 120 tr/min, à une température ambimte (23°C), pendant au moins une heure,
o en ce que, dans un deuxième temps, le mélange ainsi obtenu est porté sous agitation à une température comprise entre 100 et 200°C, pendant au moins une heure,
o et en ce que l'on procède, dans un troisième temps, à au moins un mélange du reste de la phase silicone avec le mélange obtenu dans le deuxième temps,

ce (ou ces) mélange(s) complémentaire(s) s'effectuant de préférence à température ambiante.

**8.** Procédé selon l'une quelconque des revendications 1 à 7, **caractérisé en ce que** l'on choisit les produits suivants à titre de constituants de la phase silicone :

- POS (**A**) : produit présentant des motifs de formule :

$$W_aZ_bSiO_{\frac{4-(a+b)}{2}} \qquad \textbf{(A.1)}$$

dans laquelle :

- W est un groupe alcényle, de préférence vinyle ou alkyle,
- Z est un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryle et, avantageusement, parmi les radicaux xylyle et tolyle et phényle,
- a est 1 ou 2, b est 0, 1 ou 2 et a + b est compris entre 1 et 3,

éventuellement au moins une partie des autres motifs sont des motifs de formule moyenne:

$$Z_cSiO_{\frac{4-c}{2}} \qquad \textbf{(A.2)}$$

dans laquelle Z a la même signification que ci-dessus et c a une valeur comprise entre 0 et 3, par exemple entre 1 et 3; les diméthylpolysiloxanes à extrémités diméthylvinylsilyle, les copolymères méthylvinyldiméthylpolysiloxanes à extrémités triméthylsilyle, les copolymères méthylvinyldiméthyl-polysiloxanes à extrémités diméthylvinylsilyle, les méthylvinylpolysiloxanes cycliques, étant plus spécialement sélectionnés;

- POS (**B**) : produit présentant des motifs siloxyle dé formule :

$$H_dL_cSiO_{\frac{4-(d+c)}{2}} \qquad \textbf{(B.1)}$$

dans laquelle :

- L est un groupe hydrocarboné monovalent, exempt d'action défavorable sur l'activité du catalyseur e choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
- d est 1 ou 2, c est 0, 1 ou 2, d + c a une valeur comprise entre 1 et 3,
- éventuellement, an moins une partie des autres motifs étant des motifs de formule moyenne :

$$L_gSiO_{\frac{4-g}{2}} \qquad \textbf{(B.2)}$$

dans laquelle L a la même signification que ci-dessus et g a une valeur comprise entre 0 et 3, et le poly(diméthylsiloxane) (méthylhydrogénosiloxy) ($\alpha$,$\omega$-diméthylhydrogéno) siloxane, étant plus spécialement sélectionnés.

9. Procédé selon l'une quelconque des revendications 1 à 7, **caractérisé en ce que** l'on choisit, à titre de constituants de la phase silicone, un ou plusieurs POS réticulables par voie cationique ou radicalaire :

   o en présence d'une quantité efficace de systèmes amorceurs cationiques (amorceurs thermiques et/ou photoamorceurs)- les amorceurs du type borate d'onium ou de complexes organo-métalliques, les solvants organiques donneurs de protons (alcool isopropylique, alcool benzylique...),
   o et/ou selon le cas en présence d'un initiateur radicalaire, par l'intermédiaire d'une activation par rayonnement actiniqtie (UV) ou par faisceaux d'électrons;

   ces POS étant de préférence des époxysiliconcs et/ou des vinyléthersilicones, linéaires ou cycliques.

10. Procédé selon l'une quelconque des revendications 1 à 9, **caractérisé en ce que** la composition silicone liquide d'enduction comprend en outre :

   ☐ au moins un promoteur d'adhérence (E)
   ☐ et/ou au moins additif (F) courant dans les compositions silicone réticulant par polyaddition, par poly-condensation, par voie cationique ou par voie radicalaire.

11. Procédé selon l'une quelconque des revendications 1 à 10, **caractérisé en ce que** la composition silicone liquide est une huile silicone :

   - qui comprend un ou plusieurs POS (A), éventuellement un composé(B)-et éventuellement un diluant et/ou un solvant (Di)-,
   - et qui est chargée en particules anti-brouillard.

12. Procédé selon l'une quelconque des revendications 1 à 11, **caractérisé en ce que** la composition silicone liquide est une émulsion aqueuse de phase silicone à base de composés (A) et éventuellement(B), chargée en particules anti-brouillard.

13. Utilisation de particules non cellulosiques à titre d'additifs anti-brouillard dans des compositions silicone liquides rédculables destinées à l'enduction de supports flexibles pour former des revêtements réticulés, à l'aide d'un dispositif d'enduction à cylindres, de manière à lutter contre l'apparition de brouillard lors de l'enduction, **caractérisée en ce que** les particules anti-brouillard sont telles que définies dans la revendication 1.

14. Procédé d'enduction de supports flexibles avec au moins une composition silicone liquide précurseur de revêtement (s) silicone, **caractérisé en ce que** l'on a recours au procédé de lutte contre l'apparition de brouillard ("misting") selon l'une quelconque des revendications 1 à 12.

15. Procédé selon la revendication précédente, **caractérisé en ce que** ledit dispositif d'enduction à cylindre comprend au moins un cylindre gravé.

## Patentansprüche

1. Verfahren zum Bekämpfen des Auftretens von Nebel ("misting") beim Beschichten flexibler Träger mit wenigstens einer flüssigen Silikon-Zusammensetzung, welche Vorläufer von Silikon-Überzug/Überzügen ist, mittels einer Vorrichtung zum Beschichten mittels Walzen, wobei die flüssige Zusammensetzung umfasst:

   -A- wenigstens ein Poly-Organo-Siloxan (POS), welches mittels Poly-Addition, Poly-Kondensation, auf kationischem Weg oder auf radikalischem Weg vernetzbar ist
   -B- gegebenenfalls wenigstens eine vernetzende Silizium-organische Zusammensetzung
   -C- gegebenenfalls wenigstens einen Katalysator der Vernetzungs-Reaktion

   **dadurch gekennzeichnet, dass** die erhaltene flüssige Beschichtungs-Zusammensetzung aktiviert wird durch Mischen von:

• einer Silikon-Phase, welche einen oder mehrere POS(A) und gegebenenfalls eine oder mehrere Zusammensetzung(en) (B) (vernetzend) umfasst, und deren Viskosität η bei 25°C kleiner ist als 2000 mPa.s, bevorzugt zwischen 50 und 1400 mPa.s umfasst ist, und noch stärker bevorzugt zwischen 100 und 1000 mPa.s umfasst ist;
• mit Zellulose-freien Anti-Nebel-Partikeln, deren durch ihren $D_{50}$ Wert (in μm) gegebene Granulometrie derart ist, dass:

$$D_{50} = 10$$

bevorzugt

$$0,001 = D_{50} = 5$$

und noch stärker bevorzugt

$$0,01 = D_{50} = 2$$

wobei diese Anti-Nebel-Partikel in die flüssige Silikon-Zusammensetzung zu ("ä raison de") 1 bis 10 Gewichts-% inkorporiert sind;

• und gegebenenfalls mit einer flüssigen Zusammensetzung (D), welche besteht aus:

i. einem Verdünnungs-Mittel und/oder einem Lösungsmittel, welches aus einer Nicht-Silizium-organischen oder Silizium-organischen organischen Zusammensetzung besteht, welche dazu geeignet ist oder nicht dazu geeignet ist, mit der (oder den) Verbindung(en) (A) zu reagieren,
ii. und/oder Wasser im Falle des Einsatzes eines Systems als Emulsion.

**2.** Verfahren gemäß Anspruch 1, **dadurch gekennzeichnet, dass** die Anti-Nebel-Partikel aus der Gruppe ausgewählt sind, welche umfasst:

- Kohlenstoff-Schwarz ("noir de carbone")
- $SiO_2$
- $CaCO_3$
- $TiO_2$
- $BaSO_4$
- $Al_2O_3$
- Kalk
- Talkum
- Glimmer
- zerkleinerter Quarz
- natürliche oder synthetische Tone (ausgedehnte oder nicht-ausgedehnte Vermiculite, Kaolin)
- Pulver auf Basis synthetischen/synthetischer Polymers/Polymere, welches nicht ein auf Zellulose basierendes Polymer ist
- Diatomeen-Erden
- und ihre Mischungen

wobei die Kieselsäure, das Kaolin, der Talk, $TiO_2$ besonders bevorzugt sind; wobei diese Partikel gegebenenfalls einer Oberflächen-Behandlung unterworfen wurden.

**3.** Verfahren gemäß Anspruch 1 oder Anspruch 2, **dadurch gekennzeichnet, dass** die Partikel eine spezifische Oberfläche (Ss) BET aufweisen, welche zwischen 0,5 $m^2/g$ und 500 $m^2/g$, bevorzugt zwischen 2 und 400 $m^2/g$, und noch stärker bevorzugt zwischen 50 $m^2/g$ und 300 $m^2/g$ umfasst ist.

**4.** Verfahren gemäß einem der Ansprüche 1 bis 3, **dadurch gekennzeichnet, dass** wenigstens ein Teil der Silikon-Phase mit allen oder einem Teil der Anti-Nebel-Partikel gemischt wird, welche in Form trockenen Pulvers und/oder in Form einer Suspension in einer Flüssigkeit (organisch oder wässrig), bevorzugt in trockener PulverForm, vorliegen.

**5.** Verfahren gemäß einem der Ansprüche 1 bis 4, **dadurch gekennzeichnet, dass**

- in progressiver Weise die Gesamtheit der Anti-Nebel-Partikel mit der Silikon-Phase in kontinuierlicher oder dispergierter Form gemischt wird;
- oder in progressiver Weise die Gesamtheit der Anti-Nebel-Partikel mit einer Fraktion des POS(A) gemischt wird, wobei diese intermediäre Mischung anschließend mit der Silikon-Phase in kontinuierlicher oder dispergierter Form gemischt wird, welche die Rückstands-Fraktion der Silikon-Phase umfasst.

**6.** Verfahren gemäß einem der Ansprüche 1 bis 5, **dadurch gekennzeichnet, dass** die Mischung Silikon-Phase/Anti-Nebel-Partikel mittels eines klassischen Mischers bewirkt wird, welcher dafür bekannt ist, in fluiden Medien zu dispergieren, wobei er unter Umgebungs-Temperatur arbeitet.

**7.** Verfahren gemäß einem der Ansprüche 1 bis 5, **dadurch gekennzeichnet,**

- **dass** behandelte oder nicht behandelte Anti-Nebel-Partikel auf Basis von pyrogen und/oder durch Ausfällen erhaltener Kieselsäure verwendet werden,
- **dass** während einer ersten Zeit in progressiver Weise ein Teil der Silikon-Phase in kontinuierlicher Form mit den Anti-Nebel-Partikeln auf Silizium-Basis in einem klassischen Mischer gemischt wird, welcher dafür bekannt ist, in fluiden Medien zu dispergieren, und dessen Rotations-Geschwindigkeit zwischen 50 und 500 Umdrehungen/Minute, bevorzugt zwischen 80 und 120 Umdrehungen/Minute umfasst ist, bei einer Umgebungs-Temperatur (23°C) während wenigstens einer Stunde,
- **dass** in einer zweiten Zeit die auf diese Weise erhaltene Mischung bei einer zwischen 100 und 200°C umfassten Temperatur während wenigstens einer Stunde bewegt wird,
- und **dadurch**, dass in einer dritten Zeit wenigstens eine Mischung des Restes der Silikon-Phase mit der während der zweiten Zeit erhaltenen Mischung verarbeitet wird, wobei diese komplementäre(n) Mischung(en) bevorzugt bei Umgebungs-Temperatur bewirkt werden.

**8.** Verfahren gemäß einem der Ansprüche 1 bis 7, **dadurch gekennzeichnet, dass** die folgenden Produkte als Konstituenten der Silikon-Phase gewählt werden:

- <u>POS(A)</u> : Produkt, welches Grundeinheiten ("motifs") der Formel

$$W_a Z_b SiO_{\frac{4-(a+b)}{2}} \qquad (A.1)$$

aufweist, wobei

- W eine Alkenyl-Gruppe, bevorzugt Vinyl- oder Alkyl- ist,
- Z eine monovalente Hydrogencarbonat-/Kohlenwasserstoff-abgeleitete ("hydrocarboné")Gruppe ist, welche von ungünstiger Einwirkung auf die Katalysator-Aktivität befreit ist, und welche bevorzugt aus den Alkyl-Gruppen mit 1 bis 8 enthaltenen Kohlenstoff-Atomen, und vorteilhafter Weise aus den Methyl-, Ethyl-, Propyl- und 3,3,3-Trifluor-Propyl-Gruppen, und auch aus den Aryl-Gruppen und vorteilhafter Weise aus den Xylyl-, Tolyl- und Phenyl-Radikalen ausgewählt ist,
- a zwischen 1 und 2 ist, b 0,1 oder 2 ist, und a+b zwischen 1 und 3 umfasst ist,

gegebenenfalls wenigstens ein Teil der anderen Grundeinheiten Grundeinheiten gemäß der/einer mittleren Formel:

$$Z_c SiO_{\frac{4-c}{2}} \qquad (A.2)$$

sind, in welcher Z die gleiche Bedeutung hat wie oben, und c einen Wert aufweist, welcher zwischen 0 und 3, beispielsweise zwischen 1 und 3 umfasst ist;
die Dimethyl-Poly-Siloxane mit Dimethyl-Vinyl-Silyl-Enden, die Copolymere aus Methyl-Vinyl-Dimethyl-Poly-Siloxanen mit Tri-Methyl-Silyl-Enden, die Copolymere aus Methyl-Vinyl-Dimethyl-Poly-Siloxanen mit Di-Methyl-Vinyl-Silyl-Enden, die zyklischen Methyl-Vinyl-Poly-Siloxane, welche spezieller ausgewählt sind;
- POS(B): Produkt, welches Siloxyl-Grundeinheiten gemäß der Formel

$$H_dL_cSiO_{\frac{4-(d+c)}{2}} \qquad (B.1)$$

aufweist, in welcher:

- L eine monovalente Hydrogencarbonat-/Kohlenwasserstoff-abgeleitete ("hydrocarbone")Gruppe ist, welche von ungünstiger Einwirkung auf die Katalysator-Aktivität befreit ist, und welche bevorzugt aus den Alkyl-Gruppen mit 1 bis 8 enthaltenen Kohlenstoff-Atomen, und vorteilhafter Weise aus den Methyl-, Ethyl-, Propyl- und 3,3,3-Trifluor-Propyl-Gruppen, und auch aus den Aryl-Gruppen und vorteilhafter Weise aus den Xylyl-, Tolyl- und Phenyl-Radikalen ausgewählt ist,
- d 1 oder 2 ist, c 0, 1 oder 2 ist, d+c einen Wert aufweist, welcher zwischen 1 und 3 enthalten ist,
- gegebenenfalls wenigstens ein Teil der anderen Grundeinheiten aus Grundeinheiten gemäß der/einer mittleren Formel:

$$L_gSiO_{\frac{4-g}{2}} \qquad (B.2)$$

bestehen,

wobei L die gleiche Bedeutung hat wie oben, und g einen Wert aufweist, welcher zwischen 0 und 3 umfasst ist, und die Poly(Di-Methyl-Siloxan) (Methyl-Wasserstoff-Siloxy) (α,ω-Di-Methyl-Wasserstoff) Siloxane, welche spezieller ausgewählt sind.

**9.** Verfahren gemäß einem der Ansprüche 1 bis 7, **dadurch gekennzeichnet, dass** als Konstituenten der Silikon-Phase ein oder mehrere auf kationischem oder radikalischem Wege vernetzbare POS ausgewählt wird/werden:

• in Anwesenheit einer wirksamen Menge kationischer Starter-Systeme (thermische Starter und/oder photo-Starter), die Starter vom Typ onium-Borat oder organo-metallischer Komplexe, die Protonenspendenden organischen Lösungsmittel (IsopropylAlkohol, Benzylalkohol ...),
• und/oder gegebenenfalls in Anwesenheit eines Radikal-Bildners mittels einer Aktivierung durch aktinische Bestrahlung (UV) oder mittels Elektronen-Bündel;

wobei diese POS bevorzugt lineare oder zyklische Epoxy-Silikone und/oder Vinylether-Silikone sind.

**10.** Verfahren gemäß einem der Ansprüche 1 bis 9, **dadurch gekennzeichnet, dass** die flüssige Silikon-Zusammensetzung zum Beschichten ferner umfasst:

• wenigstens eine Anhaft-fördernde Substanz (E)
• und/oder wenigstens (ein) unter den Silikon-Zusammensetzungen, welche mittels Poly-Addition, mittels Poly-Kondensation, auf kationischem oder radikalischem Weg vernetzen, gängiges Additiv (F).

**11.** Verfahren gemäß einem der Ansprüche 1 bis 10, **dadurch gekennzeichnet, dass** die flüssige Silikon-Zusammensetzung ein Silikon-Öl ist:

- welches ein oder mehrere POS(A), gegebenenfalls eine Zusammensetzung(B), und gegebenenfalls ein Verdünnungs-Mittel und/oder ein Lösungsmittel (Di) umfasst,
- und welches mit Anti-Nebel-Partikeln beladen ist.

**12.** Verfahren gemäß einem der Ansprüche 1 bis 11, **dadurch gekennzeichnet, dass** die flüssige Silikon-Zusammensetzung eine wässrige Emulsion von Silikon-Phase auf Basis von Zusammensetzungen (A) und gegebenenfalls (B) ist, welche mit Anti-Nebel-Partikeln beladen ist.

**13.** Verwendung von Nicht-Cellulose-Partikeln als Anti-Nebel-Additive in vernetzbaren flüssigen Silikon-Zusammensetzungen, welche zum Beschichten von flexiblen Trägern zwecks Ausbildens vernetzter Beschichtungen mittels einer Walzen-Beschichtungs-Vorrichtung vorgesehen sind, um das Auftreten von Nebel beim Beschichten zu bekämpfen, **dadurch gekennzeichnet, dass** die Anti-Nebel-Partikel die in Anspruch 1 definierten sind.

**14.** Verfahren zum Beschichten flexibler Träger mit wenigstens einer flüssigen Silikon-Zusammensetzung, welche Vorläufer von Silikon-Überzug/Überzügen ist, **dadurch gekennzeichnet, dass** auf das Verfahren zum Bekämpfen des Auftretens von Nebel ("misting") gemäß einem der Ansprüche 1 bis 12 zurückgegriffen wird.

**15.** Verfahren gemäß einem der vorhergehenden Ansprüche, **dadurch gekennzeichnet, dass** die Vorrichtung zum Beschichten mittels Walze wenigstens eine gravierte Walze umfasst.

## Claims

**1.** Method of combating misting during the coating of flexible substrates, with at least one liquid silicone composition that is a precursor of a silicone coating or silicone coatings, using a cylinder coating device, the liquid composition comprising:

-A- at least one polyorganosiloxane (POS) crosslinkable by polyaddition, by polycondensation, by a cationic process or by a free radical process,
-B- optionally at least one crosslinking organosilicon compound,
-C- and optionally at least one catalyst for the crosslinking reaction,
**characterized in that** the liquid coating composition obtained is used by mixing:

• a silicone phase containing one or more POS (A) and optionally one or more compounds (B) (crosslinking agent) whose viscosity $\eta$ at 25°C is below 2000 mPa.s, preferably between 50 and 1400 mPa.s and particularly preferably between 100 and 1000 mPa.s,
• with non-cellulosic anti-misting particles whose particle size, given by their $D_{50}$ (in $\mu$m), is such that:

$$D_{50} \leq 10$$

preferably

$$0.001 \leq D_{50} \leq 5$$

and particularly preferably

$$0.01 \leq D_{50} \leq 2$$

these anti-misting particles being incorporated into the liquid silicone composition at a rate of 1 to 10% by weight,
• and optionally with a liquid composition (D) consisting of:

i. a diluent and/or a solvent consisting of a non-organosilicon or organosilicon organic compound that may or may not be capable of reacting with the compound(s) (A),
ii. and/or water in the case where an emulsion system is used.

**2.** Method according to claim 1, **characterized in that** the anti-misting particles are selected from the group comprising:

- carbon black

- $SiO_2$
- $CaCO_3$
- $TiO_2$
- $BaSO_4$
- $Al_2O_3$
- lime
- talcum
- mica
- ground quartz
- natural or synthetic clays (expanded or non-expanded vermiculite, kaolin)
- powders based on synthetic polymer(s) other than a cellulosic polymer
- diatomaceous earths
- and mixtures thereof,

silica, kaolin, talcum and $TiO_2$ being particularly preferred, these particles optionally having undergone a surface treatment.

**3.** Method according to claim 1 or claim 2, **characterized in that** the particles have a BET specific surface area (Ss) of between 0.5 $m^2/g$ and 500 $m^2/g$, preferably of between 2 and 400 $m^2/g$ and particularly preferably of between 50 and 300 $m^2/g$.

**4.** Method according to any one of claims 1 to 3, **characterized in that** at least part of the silicone phase is mixed with all or some of the anti-misting particles in pulverulent dry form and/or in the form of a suspension in a liquid (organic or aqueous), preferably in pulverulent dry form.

**5.** Method according to any one of claims 1 to 4, **characterized in that**:

• either all the anti-misting particles are mixed gradually with the silicone phase in continuous or disperse form,
• or all the anti-misting particles are mixed gradually with a fraction of the POS (A), this intermediate mixture then being mixed with the silicone phase, in continuous or disperse form, comprising the residual fraction of the silicone phase.

**6.** Method according to any one of claims 1 to 5, **characterized in that** the mixing of the silicone phase with the anti-misting particles is carried out with a conventional mixer which is known to have a dispersing action in fluid media, operating at ambient temperature.

**7.** Method according to any one of claims 1 to 5, **characterized in that**:

o anti-misting particles based on treated or untreated pyrogenic and/or precipitated silica are used,
o in a first step, part of the silicone phase, in continuous form, is mixed gradually with the silica-based anti-misting particles in a conventional mixer which is known to have a dispersing action in fluid media and whose speed of rotation is between 50 and 500 rpm, preferably between 80 and 120 rpm, at ambient temperature (23°C), for at least one hour,
o in a second step, the resulting mixture is agitated at a temperature of between 100 and 200°C for at least one hour,
o and, in a third step, the remainder of the silicone phase is mixed at least once with the mixture obtained in the second step,

this (these) additional mixing operation(s) preferably being carried out at ambient temperature.

**8.** Method according to any one of claims 1 to 7, **characterized in that** the following products are chosen as constituents of the silicone phase:

- POS (A): products having units of the formula

$$W_aZ_bSiO_{\frac{4-(a+b)}{2}} \qquad (A.1)$$

in which:

- W is an alkenyl group, preferably vinyl, or an alkyl group,
- Z is a monovalent hydrocarbon group devoid of an unfavourable action on the activity of the catalyst and preferably selected from alkyl groups having from 1 to 8 carbon atoms inclusive, advantageously methyl, ethyl, propyl and 3,3,3-trifluoropropyl groups, and from aryl groups, advantageously xylyl, tolyl and phenyl radicals,
- a is 1 or 2, b is 0, 1 or 2 and a + b is between 1 and 3,

optionally at least some of the other units being units of the empirical formula

$$Z_cSiO_{\frac{4-c}{2}} \qquad (A.2)$$

in which Z is as defined above and c has a value of between 0 and 3, for example of between 1 and 3, dimethylpolysiloxanes with dimethylvinylsilyl end groups, methylvinyldimethylpolysiloxane copolymers with trimethylsilyl end groups, methylvinyldimethylpolysiloxane copolymers with dimethylvinylsilyl end groups and cyclic methylvinylpolysiloxanes being more especially selected;
- POS (B): products having siloxy units of the formula

$$H_dL_cSiO_{\frac{4-(d+c)}{2}} \qquad (B.1)$$

in which:

- L is a monovalent hydrocarbon group devoid of an unfavourable action on the activity of the catalyst and preferably selected from alkyl groups having from 1 to 8 carbon atoms inclusive, advantageously methyl, ethyl, propyl and 3,3,3-trifluoropropyl groups, and from aryl groups, advantageously xylyl, tolyl and phenyl radicals,
- d is 1 or 2, c is 0, 1 or 2 and d + c has a value of between 1 and 3,

optionally at least some of the other units being units of the empirical formula

$$L_gSiO_{\frac{4-g}{2}} \qquad (B.2)$$

in which L is as defined above and g has a value of between 0 and 3, poly(dimethylsiloxane), (methylhydrogenosiloxy)($\alpha$,$\omega$-dimethylhydrogeno)siloxane being more especially selected.

**9.** Method according to any one of claims 1 to 7, **characterized in that** the chosen constituents of the silicone phase are one or more POS that are crosslinkable by a cationic or free radical process:

o in the presence of an effective amount of cationic initiating systems (thermal initiators and/or photoinitiators), initiators of the onium borate or organometallic complex type, or proton-donating organic solvents (isopropyl alcohol, benzyl alcohol, etc.),
o and/or, depending on the particular case, in the presence of a free radical initiator via activation by actinic radiation (UV) or electron beams,

these POS preferably being linear or cyclic epoxy silicones and/or vinyl ether silicones.

**10.** Method according to any one of claims 1 to 9, **characterized in that** the liquid silicone coating composition also comprises:

☐ at least one adhesion promoter (E),
☐ and/or at least one additive (F) commonly used in silicone compositions that crosslink by polyaddition, by

polycondensation, by a cationic process or by a free radical process.

**11.** Method according to any one of claims 1 to 10, **characterized in that** the liquid silicone composition is a silicone oil which:

- comprises one or more POS (A), optionally a compound (B) and optionally a diluent and/or a solvent (Di),
- and is filled with anti-misting particles.

**12.** Method according to any one of claims 1 to 11, **characterized in that** the liquid silicone composition is an aqueous emulsion of a silicone phase based on compounds (A) and optionally (B), filled with anti-misting particles.

**13.** Use of non-cellulosic particles as anti-misting additives in crosslinkable liquid silicone compositions for coating flexible substrates in order to form crosslinked coatings, using a cylinder coating device, so as to combat misting during coating, **characterized in that** the anti-misting particles are as defined in claim 1.

**14.** Process for the coating of flexible substrates with at least one liquid silicone composition that is a precursor of a silicone coating or silicone coatings, **characterized in that** the method of combating misting according to any one of claims 1 to 12 is used.

**15.** Process according to the preceding claim, **characterized in that** said cylinder coating device comprises at least one engraved cylinder.